# EUROPEAN PATENT APPLICATION

(11) **EP 4 765 117 A1**
(43) Date of publication of application: **24.06.2026**
(21) Application number: 24307263.4
(22) Date of filing: 20.12.2024
(51) Int. Cl.: G10L 25/18, G10L 25/30, G10L 25/51

(54) **METHODS, PROCESSORS AND SYSTEMS FOR DETECTING SYNTHETIC AUDIO CONTENT**

(71) Applicant: DEEZER S.A., 75009 Paris (FR)
(72) Inventor: AFCHAR HERAVI MOGHADDAM, Darius, 75019 Paris (FR)
(74) Representative: BCF Global

(57) **Abstract**

Methods and processors for detecting a synthetic audio signal is disclosed. The method comprising: acquiring a candidate audio signal; generating a spectrogram representation of the candidate audio signal, the spectrogram representation comprising values for respective frequency-time pairs; generating a frequency-based combined patch using the spectrogram, a given combined value in the frequency-based combined patch being a combination of values from the spectrogram sharing a same frequency coordinate and different time coordinates; classifying the candidate audio signal as the synthetic audio signal using the frequency-based combined patch.

## Description

### FIELD

The present technology relates to signal processing in general, and more particularly, to methods, processors and systems for detecting synthetic audio content.

### BACKGROUND

Broadly, detection of AI-generated audio, also known as "*deep fake*" audio, involves identifying artifacts and structural inconsistencies that distinguish synthetically-generated audio from human-made audio. For example, AI-generated music may lack temporal and harmonic variations found in human compositions, exhibiting repetitive patterns, rigid transitions, and/or inconsistencies in dynamic expression.

It should be noted that signal processing techniques can be used to scrutinize time or frequency domain characteristics of audio signals. Machine learning can also be deployed to detect these anomalies by identifying latent features that correlate with AI generation.

It should be noted that AI architectures such as Variational Auto-Encoders (VAEs) and Generative Adversarial Networks (GANs) produce increasingly realistic music. Since generators are complex enough to be trained to avoid coarse and audible errors, detection frameworks need to be ameliorated to capture artefacts that are increasingly subtle. Reliable detection frameworks are needed for ensuring authenticity in music production, addressing copyright concerns, and/or mitigating the risks of synthetic replication in digital audio domains.

United States Patent No. 12,131,750B1 issued October 29, 2024 and entitled "*Methods and Systems for Enhancing the Detection of Synthetic Voice Data*" discloses a method for enhancing detection of synthetic voice data that includes converting, by an electronic device, monophonic data into stereophonic voice data,

### SUMMARY

It is an object of the present technology to ameliorate at least some of the inconveniences present in the prior art. Embodiments of the present technology may provide and/or broaden the scope of approaches to and/or methods of achieving the aims and objects of the present technology.

Developers of the present technology have realized that some conventional detection systems are "model-specific", meaning that they are designed for a specific model to have a high detection accuracy. To do so, the specific model needs to be accessed during the design process of the detection system. This results in detection systems with low accuracy for models that remain private and/or confidential. Developers realized the benefit of designing a model-agnostic detection system so as to detect audio signals generated by models that are *not per se* accessible.

Developers of the present technology have realized that some conventional detection systems can be accurate for public models. However, the accuracy of current detection systems is not generalizable to a variety of models. This is a technical challenge for real-world situations, since the model that has been used to generate a candidate audio signal is *apriori* unknown. As a result, there is a need for detection system that has a high accuracy across a variety of potential models. Developers realized the benefit of designing a model-agnostic detection system for detecting audio signals generated by different types models.

Developers of the present technology have realized that some conventional detection systems are typically not interpretable. In other words, even if a conventional detection system accurately classifies a candidate audio signal, the system is still ill-suited for providing human interpretable reasons regarding the classification decision. Developers realized the benefit of designing an interpretable detection system for classifying audio signals.

In at least some aspects of the present technology, there is provided a detection system configured to leverage a particular type of artifacts in audio signals generated using an AI model. Developers have realized that in a context of image generation, many models leave "checkerboard" artifacts in the generated content. In the context of the present technology, there is provided a detection system that is configured to detect checkerboard artifacts in synthetic audio content generated by AI models.

In some aspects of the present technology, developers have devised methods, devices, processors and systems for performing time-domain audio signal processing for detection of synesthetic audio content. In other aspects of the present technology, developers have devised methods, devices, processors and systems for performing frequency-domain audio signal processing for detection of synesthetic audio content. It is contemplated that both time-domain and frequency-domain signal processing may be performed for detection of synthetic audio content, without departing from the scope of the present technology.

In accordance with a first broad aspect of the present technology, there is provided a method for detecting a synthetic audio signal, the method executable by a processor, the method comprising: acquiring a candidate audio signal including a plurality of audio values; generating a set of patches using the plurality of audio values, a given one from the set of patches including a pre-determined number of audio values from the plurality of audio values, generating a combined patch using the set of patches, a given one value in the combined patch being a combination of values from respective ones from the set of patches; classifying the candidate audio signal as the synthetic audio signal using the combined patch.

In some implementations of the method, the set of patches is a sequence of patches, the given one from the sequence of patches including a sub-sequence of audio values from the plurality of audio values, the sub-sequence of audio values including the pre-determined number of sequential audio values.

In some implementations of the method, the generating a combined patch comprises: generating a first combined audio value of the combined patch by combining respective first audio values from the set of patches.

In some implementations of the method, the first combined audio value is at least one of an average audio value, a mean audio value, and a median audio value of the respective first audio values from the set of patches.

In some implementations of the method, the method further comprises normalizing the combined patch.

In some implementations of the method, the classifying comprises: providing the combined patch to a regression model for generating an regression output, the regression output being indicative of a likelihood that the candidate audio signal is the synthetic audio signal; and comparing the regression output against a pre-determined threshold for determining that the candidate audio signal as the synthetic audio signal.

In some implementations of the method, the regressing model is a Neural Network (NN).

In some implementations of the method, the pre-determined number of audio values is a first patch size, and the method further comprises: generating an other set of patches using the plurality of audio values, a given one from the other set of patches including an other pre-determined number of audio values from the plurality of audio values, the other pre-determined number of audio values being a second patch size, generating an other combined patch using the other set of patches, a given one value in the other combined patch being a combination of values from respective ones from the other set of patches; generating a fingerprint using the combined patch and the other combined patch; and wherein the classifying comprises classifying the candidate audio signal as the synthetic audio signal using the fingerprint.

In some implementations of the method, the candidate audio signal is a first candidate audio signal provider by a given audio signal provider, and the combined patch is a first combined patch, the method further comprises: acquiring a second candidate audio signal including a second plurality of audio values, the second candidate audio signal being originated by the same given audio signal provider; generating a second set of patches using the second plurality of audio values, a given one from the second set of patches including a second pre-determined number of audio values from the second plurality of audio values, generating a second combined patch using the second set of patches, a given one value in the second combined patch being a combination of values from respective ones from the second set of patches; and classifying the second candidate audio signal as a second synthetic audio signal using the second combined patch.

In some implementations of the method, the method further comprises identifying at least one characteristic of an AI model used by the audio signal provider for generating the synthetic audio signal and the second synthetic audio signal based on at least one of the first combined patch and the second combined patch.

In accordance with a second broad aspect of the present technology, there is provided a processor for detecting a synthetic audio signal, the processor being configured to: acquire a candidate audio signal including a plurality of audio values; generate a set of patches using the plurality of audio values, a given one from the set of patches including a pre-determined number of audio values from the plurality of audio values, generate a combined patch using the set of patches, a given one value in the combined patch being a combination of values from respective ones from the set of patches; classify the candidate audio signal as the synthetic audio signal using the combined patch.

In some implementations of the processor, the set of patches is a sequence of patches, the given one from the sequence of patches including a sub-sequence of audio values from the plurality of audio values, the sub-sequence of audio values including the pre-determined number of sequential audio values.

In some implementations of the processor, to generate a combined patch comprises the processor configured to: generate a first combined audio value of the combined patch by combining respective first audio values from the set of patches.

In some implementations of the processor, the first combined audio value is at least one of an average audio value, a mean audio value, and a median audio value of the respective first audio values from the set of patches.

In some implementations of the processor, the processor is further configured to normalize the combined patch.

In some implementations of the processor, to classify comprises the processor configured to: provide the combined patch to a regression model for generating an regression output, the regression output being indicative of a likelihood that the candidate audio signal is the synthetic audio signal; and compare the regression output against a pre-determined threshold for determining that the candidate audio signal as the synthetic audio signal.

In some implementations of the processor, the regressing model is a Neural Network (NN).

In some implementations of the processor, the pre-determined number of audio values is a first patch size, and the processor is further configured to: generate an other set of patches using the plurality of audio values, a given one from the other set of patches including an other pre-determined number of audio values from the plurality of audio values, the other pre-determined number of audio values being a second patch size, generate an other combined patch using the other set of patches, a given one value in the other combined patch being a combination of values from respective ones from the other set of patches; generate a fingerprint using the combined patch and the other combined patch; and wherein to classify comprises the processor configured to classify the candidate audio signal as the synthetic audio signal using the fingerprint.

In some implementations of the processor, the candidate audio signal is a first candidate audio signal provider by a given audio signal provider, and the combined patch is a first combined patch, the processor is further configured to: acquire a second candidate audio signal including a second plurality of audio values, the second candidate audio signal being originated by the same given audio signal provider; generate a second set of patches using the second plurality of audio values, a given one from the second set of patches including a second pre-determined number of audio values from the second plurality of audio values, generate a second combined patch using the second set of patches, a given one value in the second combined patch being a combination of values from respective ones from the second set of patches; and classify the second candidate audio signal as a second synthetic audio signal using the second combined patch.

In some implementations of the processor, the processor is further configured to identify at least one characteristic of an AI model used by the audio signal provider for generating the synthetic audio signal and the second synthetic audio signal based on at least one of the first combined patch and the second combined patch.

In accordance with another broad aspect of the present technology, there is disclosed a method for detecting a synthetic audio signal, the method executable by a processor, the method comprising: acquiring a candidate audio signal; generating a spectrogram representation of the candidate audio signal, the spectrogram representation comprising values for respective frequency-time pairs; generating a frequency-based combined patch using the spectrogram, a given combined value in the frequency-based combined patch being a combination of values from the spectrogram sharing a same frequency coordinate and different time coordinates; classifying the candidate audio signal as the synthetic audio signal using the frequency-based combined patch.

In some implementations of the method, the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

In some implementations of the method, the method further comprises normalizing the frequency-based combined patch.

In some implementations of the method, the classifying comprises: providing the combined patch to a regression model for generating a regression output, the regression output being indicative of a likelihood that the candidate audio signal is the synthetic audio signal; and comparing the regression output against a pre-determined threshold for determining that the candidate audio signal as the synthetic audio signal.

In some implementations of the method, the regressing model is a Neural Network (NN).

In some implementations of the method, the method further comprises: generating a fingerprint for the candidate audio signal using at least the frequency-based combined patch, and wherein the classifying comprises classifying the candidate audio signal as the synthetic audio signal using the fingerprint.

In some implementations of the method, the candidate audio signal is a first candidate audio signal provider by a given audio signal provider, and the frequency-based combined patch is a first frequency-based combined patch, the method further comprises: acquiring a second candidate audio signal; generating a second spectrogram representation of the second candidate audio signal, the second spectrogram representation comprising values for respective frequency-time pairs; generating a second frequency-based combined patch using the second spectrogram, a given second combined value in the second frequency-based combined patch being a combination of values from the second spectrogram sharing a same frequency coordinate and different time coordinates; classifying the second candidate audio signal as the synthetic audio signal using the second frequency-based combined patch.

In some implementations of the method, the method further comprises identifying at least one characteristic of an AI model used by the audio signal provider for generating the synthetic audio signal and the second synthetic audio signal based on at least one of the first combined patch and the second combined patch.

In some implementations of the method, the identifying the at least one characteristic comprises using at least one of a Singular Value Decomposition (SVD) and Principal Component Analysis (PCA) on the frequency-based combined patch.

In some implementations of the method, the generating the spectrogram comprises generating the spectrogram using a Short-Tern Fourier Transform (STFT) function.

In accordance with another broad aspect of the present technology, there is provided a processor for detecting a synthetic audio signal, the processor configured to: acquire a candidate audio signal; generate a spectrogram representation of the candidate audio signal, the spectrogram representation comprising values for respective frequency-time pairs; generate a frequency-based combined patch using the spectrogram, a given combined value in the frequency-based combined patch being a combination of values from the spectrogram sharing a same frequency coordinate and different time coordinates; classify the candidate audio signal as the synthetic audio signal using the frequency-based combined patch.

In some implementations of the processor, the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

In some implementations of the processor, the processor is further configured to normalize the frequency-based combined patch.

In some implementations of the processor, the processor is configured to classify: provide the combined patch to a regression model for generating an regression output, the regression output being indicative of a likelihood that the candidate audio signal is the synthetic audio signal; and compare the regression output against a pre-determined threshold for determining that the candidate audio signal as the synthetic audio signal.

In some implementations of the processor, the regressing model is a Neural Network (NN).

In some implementations of the processor, the processor is further configured to: generate a fingerprint for the candidate audio signal using at least the frequency-based combined patch, and wherein to classify comprises the processor configured to classify the candidate audio signal as the synthetic audio signal using the fingerprint.

In some implementations of the processor, the candidate audio signal is a first candidate audio signal provider by a given audio signal provider, and the frequency-based combined patch is a first frequency-based combined patch, the processor being further configured to: acquire a second candidate audio signal; generate a second spectrogram representation of the second candidate audio signal, the second spectrogram representation comprising values for respective frequency-time pairs; generate a second frequency-based combined patch using the second spectrogram, a given second combined value in the second frequency-based combined patch being a combination of values from the second spectrogram sharing a same frequency coordinate and different time coordinates; classify the second candidate audio signal as the synthetic audio signal using the second frequency-based combined patch.

In some implementations of the processor, the processor is further configured to identify at least one characteristic of an AI model used by the audio signal provider for generating the synthetic audio signal and the second synthetic audio signal based on at least one of the first combined patch and the second combined patch.

In some implementations of the processor, to identifying the at least one characteristic comprises the processor 110 being configured to use at least one of a Singular Value Decomposition (SVD) and Principal Component Analysis (PCA) on the frequency-based combined patch.

In some implementations of the processor, the generating the spectrogram comprises generating the spectrogram using a Short-Tern Fourier Transform (STFT) function.

In accordance with another broad aspect of the present technology, there is disclosed a method for detecting a synthetic audio signal, the method executable by a processor, the method comprising: acquiring a candidate audio signal including a plurality of audio values; generating a set of patches using the plurality of audio values, a given one from the set of patches including a pre-determined number of audio values from the plurality of audio values, generating a combined patch using the set of patches, a given one value in the combined patch being a combination of values from respective ones from the set of patches; classifying the candidate audio signal as the synthetic audio signal using the combined patch; generating a spectrogram representation of the candidate audio signal, the spectrogram representation comprising values for respective frequency-time pairs; generating a frequency-based combined patch using the spectrogram, a given combined value in the frequency-based combined patch being a combination of values from the spectrogram sharing a same frequency coordinate and different time coordinates; classifying the candidate audio signal as the synthetic audio signal using the frequency-based combined patch.

In some implementations of the method, the set of patches is a sequence of patches, the given one from the sequence of patches including a sub-sequence of audio values from the plurality of audio values, the sub-sequence of audio values including the pre-determined number of sequential audio values.

In some implementations of the method, the method further comprises normalizing the combined patch.

In some implementations of the method, the method further comprises normalizing the frequency-based combined patch.

In some implementations of the method, the method further comprises: generating a fingerprint for the candidate audio signal using at least the combined patch, and wherein the classifying comprises classifying the candidate audio signal as the synthetic audio signal using the fingerprint.

In some implementations of the method, the method further comprises: generating an other fingerprint for the candidate audio signal using at least the frequency-based combined patch, and wherein the classifying comprises classifying the candidate audio signal as the synthetic audio signal using the other fingerprint.

In some implementations of the method, the method further comprises identifying at least one characteristic of an AI model used by the audio signal provider for generating the synthetic audio signal based on at least one of the combined patch and the frequency-based combined patch.

In some implementations of the method, the generating the spectrogram comprises generating the spectrogram using a Short-Tern Fourier Transform (STFT) function.

In some implementations of the method, the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

In some implementations of the method, the classifying comprises using a Neural Network (NN).

In accordance with another broad aspect of the present technology, there is provided a processor for detecting a synthetic audio signal, the processor configured to: acquire a candidate audio signal including a plurality of audio values; generate a set of patches using the plurality of audio values, a given one from the set of patches including a pre-determined number of audio values from the plurality of audio values, generate a combined patch using the set of patches, a given one value in the combined patch being a combination of values from respective ones from the set of patches; classify the candidate audio signal as the synthetic audio signal using the combined patch; generate a spectrogram representation of the candidate audio signal, the spectrogram representation comprising values for respective frequency-time pairs; generate a frequency-based combined patch using the spectrogram, a given combined value in the frequency-based combined patch being a combination of values from the spectrogram sharing a same frequency coordinate and different time coordinates; classify the candidate audio signal as the synthetic audio signal using the frequency-based combined patch.

In some implementations of the processor, the set of patches is a sequence of patches, the given one from the sequence of patches including a sub-sequence of audio values from the plurality of audio values, the sub-sequence of audio values including the pre-determined number of sequential audio values.

In some implementations of the processor, the processor is further configured to normalize the combined patch.

In some implementations of the processor, the processor is further configured to normalize the frequency-based combined patch.

In some implementations of the processor, the processor is further configured to: generate a fingerprint for the candidate audio signal using at least the combined patch, and wherein to classify comprises the processor configured to classify the candidate audio signal as the synthetic audio signal using the fingerprint.

In some implementations of the processor, the processor is further configured to: generate an other fingerprint for the candidate audio signal using at least the frequency-based combined patch, and wherein to classify comprises the processor configured to classify the candidate audio signal as the synthetic audio signal using the other fingerprint.

In some implementations of the processor, the processor further configured to identify at least one characteristic of an AI model used by the audio signal provider for generating the synthetic audio signal based on at least one of the combined patch and the frequency-based combined patch.

In some implementations of the processor, the generate the spectrogram comprises the processor configured to generate the spectrogram using a Short-Tern Fourier Transform (STFT) function.

In some implementations of the processor, the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

In some implementations of the processor, to classify comprises configured to classify using a Neural Network (NN).

In accordance with another broad aspect of the present technology, there is provided a method for detecting a synthetic audio signal, the method executable by a processor, the method comprising: acquiring a plurality of candidate audio signals from a given content provider; generating a plurality of combined patches using the plurality of candidate audio signals, a given combined patch including a set of combined amplitude values; and determining at least one characteristic of an AI model used to generate at least one candidate audio signal from the plurality of candidate audio signals.

In some implementations of the method, the method further comprises: generating a plurality of fingerprints for the plurality of candidate audio signals using the plurality of combined patches; classifying at least one from the plurality candidate audio signals as a synthetic audio signal using the plurality of fingerprints.

In some implementations of the method, the classifying comprises: providing the combined patch to a regression model for generating a regression output, the regression output being indicative of a likelihood that the candidate audio signal is the synthetic audio signal; and comparing the regression output against a pre-determined threshold for determining that the candidate audio signal as the synthetic audio signal.

In some implementations of the method, the classifying comprises using a Neural Network (NN).

In some implementations of the method, the method further comprises normalizing the fingerprints.

In some implementations of the method, the given combined patch is a given frequency-based combined patch.

In some implementations of the method, the generating the plurality of combined patches comprises using a Short-Term Fourier Transform (STFT) function.

In some implementations of the method, the determining the at least one characteristic comprises executing at least one of a Singular Value Decomposition (SVD) and a Principal Component Analysis (PCA).

In some implementations of the method, the at least one characteristic comprises one or more stride parameters used in successive deconvolution layers of the AI model.

In some implementations of the method, the at least one characteristic comprises an architectural class of the AI model.

In accordance with another broad aspect of the present technology, there is provided a processor for detecting a synthetic audio signal, the processor configured to: acquire a plurality of candidate audio signals from a given content provider; generate a plurality of combined patches using the plurality of candidate audio signals, a given combined patch including a set of combined amplitude values; and determine at least one characteristic of an AI model used to generate at least one from the plurality of audio signal.

In some implementations of the processor, the processor is further configured to: generate a plurality of fingerprints for the plurality of candidate audio signals using the plurality of combined patches; classify at least one from the plurality candidate audio signals as a synthetic audio signal using the plurality of fingerprints.

In some implementations of the processor, to classify comprises the processor configured to: provide the combined patch to a regression model for generating a regression output, the regression output being indicative of a likelihood that the candidate audio signal is the synthetic audio signal; and compare the regression output against a pre-determined threshold for determining that the candidate audio signal as the synthetic audio signal.

In some implementations of the processor, to classify comprises the processor configured to use a Neural Network (NN).

In some implementations of the processor, the processor is further configured to normalize the fingerprints.

In some implementations of the processor, the given combined patch is a given frequency-based combined patch.

In some implementations of the processor, to generate the plurality of combined patches comprises the processor configured to use a Short-Term Fourier Transform (STFT) function.

In some implementations of the processor, to determine the at least one characteristic comprises the processor configured to execute at least one of a Singular Value Decomposition (SVD) and a Principal Component Analysis (PCA).

In some implementations of the processor, the at least one characteristic comprises one or more stride parameters used in successive deconvolution layers of the AI model.

In some implementations of the processor, the at least one characteristic comprises an architectural class of the AI model.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
FIG. 1 is a schematic representation of a computer system, in accordance with at least some non-limiting embodiments of the present technology
FIG. 2 is a schematic representation of a networked system, in accordance with at least some non-limiting embodiments of the present technology
FIG. 3 illustrates a processing pipeline executable by a first computer-implemented module for classifying a candidate audio signal, as contemplated in at least some embodiments of the present technology.
FIG. 4 illustrates a processing pipeline executable by a second computer-implemented module for classifying a candidate machine learning model, as contemplated in at least some embodiments of the present technology.
FIGS. 5A-5C illustrate a time-domain audio signal processing of a candidate audio signal, executable by the computer system of FIG. 1, as contemplated in at least some embodiments of the present technology.
FIG. 6A illustrates an example of an output generated by the time-domain audio signal processing for a human-made audio signal.
FIG. 6B illustrates an example of an output generated by the time-domain audio signal processing for a synthetic audio signal.
FIGS. 7A-7C illustrate a frequency-domain audio signal processing of the candidate audio signal, executable by the computer system of FIG. 1, as contemplated in at least some embodiments of the present technology.
FIG. 8A illustrates an example of an output generated by the frequency-domain audio signal processing for a human-made audio signal.
FIG. 8B illustrates an example of an output generated by the frequency-domain audio signal processing for a synthetic audio signal.
FIG. 9 is a scheme-block representation of a first method executable by the computer system of FIG. 1, as contemplated in at least some embodiments of the present technology.
FIG. 10 is a scheme-block representation of a second method executable by the computer system of FIG. 1, as contemplated in at least some embodiments of the present technology.
FIG. 11 is a scheme-block representation of a third method executable by the computer system of FIG. 1, as contemplated in at least some embodiments of the present technology.
FIG. 12 is a scheme-block representation of a fourth method executable by the computer system of FIG. 1, as contemplated in at least some embodiments of the present technology.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

**In** the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. **In** the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

**In** the context of the present specification, "client device" is any computer hardware that is capable of running software appropriate to the relevant task at hand. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

With these fundamentals in place, we will now consider some non-limiting examples to illustrate various implementations of aspects of the present technology.

### Computer system

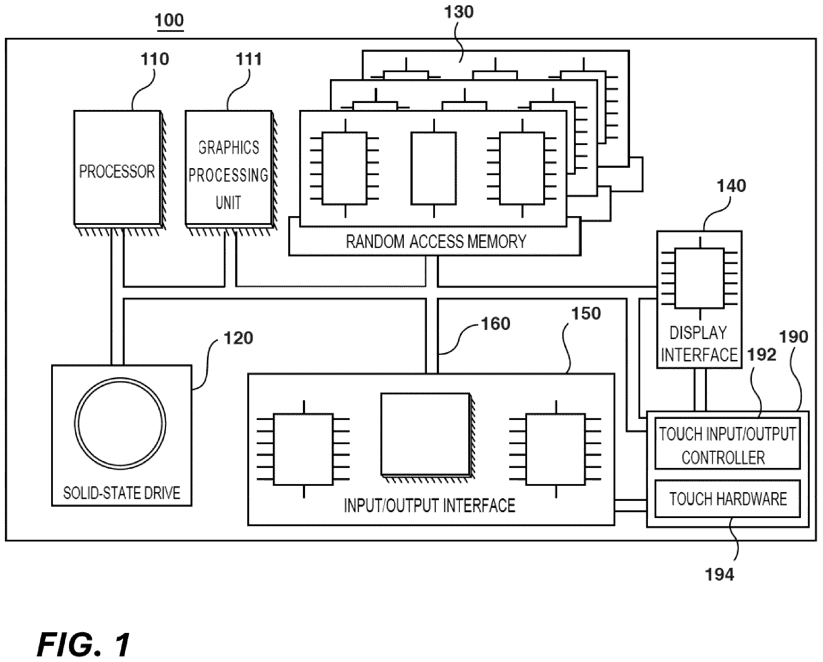

With reference to FIG. 1, there is depicted a computer system 100 suitable for use with some implementations of the present technology. The computer system 100 comprises various hardware components including one or more single or multi-core processors collectively represented by a processor 110, a graphics processing unit (GPU) 111, a solid-state drive 120, a random-access memory 130, a display interface 140, and an input/output interface 150.

According to implementations of the present technology, the solid-state drive 120 stores program instructions suitable for being loaded into the random-access memory 130 and executed by the processor 110 and/or the GPU 111. For example, the program instructions may be part of a library and/or an application.

Communication between the various components of the computer system 100 may be enabled by one or more internal and/or external buses 160 (e.g. a PCI bus, universal serial bus, IEEE 1394 "Firewire" bus, SCSI bus, Serial-ATA bus, etc.), to which the various hardware components are electronically coupled.

The input/output interface 150 may be coupled to a touchscreen 190 and/or to the one or more internal and/or external buses 160. It is noted that some components of the computer system 100 can be omitted in some non-limiting embodiments of the present technology. For example, the keyboard and the mouse (both not separately depicted) can be omitted, especially (but not limited to) where the computer system 100 is implemented as a compact electronic device.

Broadly speaking, the touchscreen 190 may comprise touch hardware 194 and a touch input/output controller 192 allowing communication with the display interface 140 and/or the one or more internal and/or external buses 160. In some embodiments, the touch hardware 194 may comprise pressure-sensitive cells embedded in a layer of a display allowing detection of a physical interaction between a user and the display.

It should be noted that various implementations of the computer system 100 are contemplated. As it will become apparent from the description herein further below, one or more computer system connected over communication network may be implemented similarly to the computer system 100, without departing from the scope of the present technology.

### Networked system

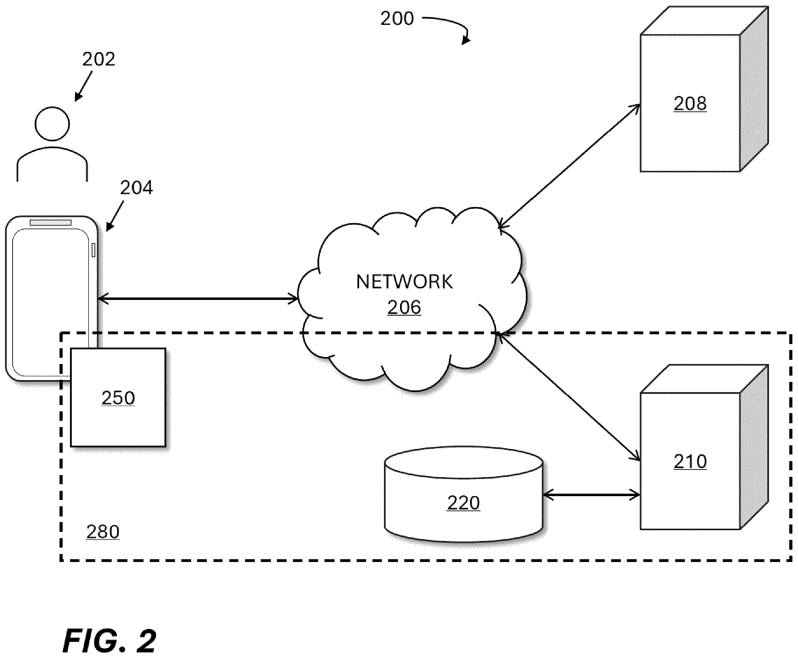

Referring to FIG. 2, there is shown a schematic diagram of a system 200, the system 200 being suitable for implementing non-limiting embodiments of the present technology. It is to be expressly understood that the system 200 as depicted is merely an illustrative implementation of the present technology. Thus, the description thereof that follows is intended to be only a description of illustrative examples of the present technology.

Broadly speaking, the system 200 is configured for providing users with audio content. To that end, the system 200 comprises *inter alia* an electronic device 204 associated with the user 202, a resource server 208, a platform server 210 and a database system 220.

For example, the user 202 may submit a given query *via* the electronic device 204 to the platform server 210 which, in response, is configured to provide search results to the user 202. The server 210 generates these search results based on information that has been retrieved from, for example, the resource server 208 and stored in the database system 220. These search results provided by the system 200 may be representative of *inter alia* audio content relevant to the submitted query. Some functionality of components of the system 200 will now be described in greater detail.

As mentioned above, the system 200 comprises the electronic device 204 associated with the user 202. As such, the electronic device 204, or simply "device" 204 can sometimes be referred to as a "client device", "end user device" or "client electronic device". It should be noted that the fact that the electronic device 204 is associated with the user 202 does not need to suggest or imply any mode of operation - such as a need to log in, a need to be registered, or the like.

In the context of the present specification, unless provided expressly otherwise, "electronic device" or "device" is any computer hardware that is capable of running a software appropriate to the relevant task at hand. Thus, some non-limiting examples of the device 204 include personal computers (desktops, laptops, netbooks, etc.), smartphones, tablets and the like. The device 204 comprises hardware and/or software and/or firmware (or a combination thereof), as is known in the art, to execute a music streaming application 250.

Generally speaking, the music streaming application 250 is a "front-end" component of a music streaming platform 280 for delivering audio content to users over the network 206. It can be said that the platform server 210 and the database system 220 are "back-end" components of the music streaming platform 280. In one non-limiting implementation of the present technology, the music streaming platform 280 may be operated by Deezer^{™}.

It should be expressly understood that the music streaming platform 280 may be supported *via* additional components to those non-exhaustively mentioned above. In other words, additional front-end and/or back-end components of the music streaming platform 280, to those illustrated in FIG. 2, are also contemplated in at least some implementations and without departing from the scope of the present technology.

In some implementations, the music streaming platform 280 may be supported by a cloud-based infrastructure for scalability and enabling quick access to a music library and efficient handling of user data. It is contemplated that the music streaming platform 280 may use encryption protocols to secure user data and ensure privacy. In other implementations, the music streaming platform 280 may also be supported by a content delivery network to optimize streaming quality and/or reduce latency by distributing content from one or more servers (such as the platform server 210, for example) geographically closer to the electronic device 204.

Generally speaking, the music streaming platform 280 may offer its users access to a vast library of songs, albums, and/or artists across various genres and/or languages. For example, the user 202 can search for specific tracks, artists, albums, and/or playlists using search functionalities enabled by the platform server 210. Additionally, discovery features may allow the user 202 to browse by genre, explore curated playlists, and/or receive content recommendations based on their listening habits and/or patterns.

In some implementations, the music streaming platform 280 may be configured to support real-time streaming of music tracks over the communication network 206. It is also contemplated that the music streaming platform 280 may also enable the user 202 to download songs for offline playback, allowing for uninterrupted access without connection to the network 206. The music streaming platform 280 may also support different audio quality settings, allowing the user 202 to choose between standard or high-fidelity streaming, for example, based on their preferences, internet bandwidth, and/or subscription model. In some implementations, the music streaming platform 280 may also enable real-time display of song lyrics, access to a wide range of podcasts, including exclusive content and/or personalized recommendations, and streaming of live radio stations, live concerts, podcasts and/or events.

In some implementations, the music streaming platform 280 may offer a variety of personalization features, with user accounts (e.g., data stored by the database system 220) enabling the storage of listening history, playlists, and preferences. For example, the user 202 can create, edit, and share their own playlists. In other implementations, the music streaming platform 280 may employ one or more AI-driven algorithms to suggest new music tailored to individual habits and/or patterns. It is also contemplated that social features may be used by the music streaming platform to enhance user experience by allowing users to share songs, albums, and playlists with other users *via* social media and/or within the app 250. For example, collaborative playlists can be created and edited by multiple users, and a social feed displays friends' listening habits, new releases, and curated recommendations.

It should be noted that the user 202 may, or may not, need to be subscribed to the music streaming platform 280 for making use of the music streaming platform 280. For example, a monetization model may include a "freemium" service, offering a free version supported by advertisements and/or a "premium service", which is an ad-free version requiring a subscription fee. Premium subscribers may gain access to exclusive releases, early access to new music, and other perks.

In some implementations, the music streaming platform 280 may be designed to be compatible with various devices, including smartphones, tablets, desktop computers, smart TVs, and wearable technology (e.g., a smartwatch). It is contemplated that the music streaming platform 280 may enable seamless synchronization of user data across multiple devices, allowing the user 202 to continue their listening experience uninterrupted from different devices. It is also contemplated that the music streaming platform 280 may be integrateable with other apps and/or services, such as social media platforms, smart home devices, and/or car entertainment systems, for example, and without departing from the scope of the present technology.

Returning to the description of FIG. 2, the system 200 comprises the communication network 206. In one non-limiting example, the communication network 206 may be implemented as the Internet. In other non-limiting examples, the communication network 206 may be implemented differently, such as any wide-area communication network, local-area communication network, a private communication network and the like. In fact, how the communication network 206 is implemented is not limiting and will depend on *inter alia* how other components of the system 200 are implemented.

The purpose of the communication network 206 is to communicatively couple at least some of the components of the system 200 such as the device 204, the resource server 208 and the platform server 210. For example, this means that the resource server 208 is accessible *via* the communication network 206 by the device 204. In another example, this means that the resource server 208 is accessible *via* the communication network 206 by the platform server 210. In a further example, this means that the platform server 210 is accessible *via* the communication network 206 by the device 204.

The communication network 206 may be used in order to transmit data packets amongst the device 204, the resource server 208 and the platform server 210. For example, the communication network 206 may be used to transmit data requests from the device 204 to the platform server 210. In another example, the communication network 206 may be used to transmit the data responses from the platform server 210 to the device 204.

As mentioned above, the resource server 208 can be accessed *via* the communication network 206. The resource server 208 may be implemented as conventional computer server. In a non-limiting example of an embodiment of the present technology, a given one of the resource server 208 may be implemented as a Dell^{™} PowerEdge^{™} Server running the Microsoft^{™} Windows Server^{™} operating system. The resource server 208 may also be implemented in any other suitable hardware and/or software and/or firmware or a combination thereof. Although in FIG. 2 a single resource server is illustrated, it should be understood that the resource server 208 may be embodied as a plurality of resource servers implemented *via* single or different operators, without departing from the scope of the present technology.

The resource server 208 is configured to host (web) resources that can be accessed by the device 204 and/or by the platform server 210. Which type of resources the resource server 208 is hosting is not limiting. However, in some embodiments of the present technology, the resources may comprise digital content such as text files, audio files, video files, and the like. The resource server 208 may be accessed by the device 204 and/or by the platform server 210 in order to retrieve digital content stored on the resource server 208.

As it will become apparent from the description herein further below, the resource server 208 may be configured to host human-made audio content and/or synthetic audio content generated *via* an AI model. In some cases, the type of audio content (human-made or synthetic) retrieved from the resource server 208 may be *apriori* known, while in other cases, the type of the of the audio content retrieved from the resource server 208 may be unknown. It is also contemplated that the type of AI model used to potentially generating synthetic audio content hosted on the resource server 208 may be *apriori* unknown.

The system 200 comprises the platform server 210 that may be implemented as a conventional computer server. In an example of an embodiment of the present technology, the platform server 210 may be implemented as a Dell^{™} PowerEdge^{™} Server running the Microsoft^{™} Windows Server^{™} operating system. Needless to say, the platform server 210 may be implemented in any other suitable hardware and/or software and/or firmware or a combination thereof. In the depicted non-limiting embodiment of present technology, the platform server 210 is a single server. In alternative non-limiting embodiments of the present technology, the functionality of the platform server 210 may be distributed and may be implemented *via* multiple servers.

Generally speaking, the platform server 210 is under control and/or management of a music streaming service provider such as, for example, an operator of the Deezer^{™} music streaming platform. As such, the platform server 210 may be configured to host one or more components of the music streaming platform 280 for providing digital content to one or more users of the music streaming platform 280.

For example, the platform server 210 may receive the data requests from the device 204 indicative of a content query submitted by the user 202. The platform server 210 may perform a search responsive to the submitted content query for generating content results that are relevant to the submitted query. As a result, the platform server 210 may be configured to generate the data responses indicative of the content results and may transmit the data responses to the device 204 for consumption by the user 202 *via* the music streaming application 250. The content results generated for the submitted query may take many forms. However, in one non-limiting example of the present technology, the content results generated by the platform server 210 may be indicative of digital audio content that is relevant to the submitted query.

The platform server 210 may be configured to "visit" resources accessible *via* the communication network 206 and to retrieve digital content for further use. For example, the platform server 210 may be configured to access the resource server 208 and to retrieve digital content hosted by the resource server 208. The platform server 210 may be configured to periodically access one or more resources over the communication network 206 for retrieving new and/or updated digital content, without departing from the scope of the present technology.

The database system 220 is configured to store and manage audio content and enable efficient retrieval operations for the platform server 210. The database system 220 may comprise a database that stores audio segments as well as associated metadata about the audio segments, such as song title, artist, album, and timestamps. In some embodiments, the database includes tables for storing the audio segments and their associated metadata, where each record in the segment table contains one or more unique IDs based on one or more respective fingerprints, the fingerprint data, and references to the metadata table. Efficient storage mechanisms may be implemented in the database system 220 for managing large volumes of data, and retrieval mechanisms support fast access and querying of the data, enabling real-time performance. For example, the database system 220 may store data (such as an index, for example) to be used by the platform server 210 during one or more processing operations.

In at least some embodiments of the present technology, the platform server 210 is configured to detect synthetic audio content stored in the database system 220 and/or hosted by the resource server 208.

In some implementations, detection of synthetic audio content may enable to verify authenticity of audio files uploaded to the platform. For example, detection of synthetic audio content may allow preventing the proliferation of synthetic audio that may degrade user experience, compromise intellectual property rights, or introduce low-quality or irrelevant content into the platform's catalog.

In some implementations, detection of synthetic audio content may mitigate fraudulent activities associated with synthetic audio content, including the artificial inflation of streaming metrics. Synthetic audio, when used in conjunction with automated bots, may generate false play counts that disrupt the platform's royalty allocation systems. detection of synthetic audio content may aid in ensuring equitable distribution of royalties to legitimate artists and content creators.

In some implementations, detection of synthetic audio content may be used as a mechanism for legal and regulatory compliance. For example, the platform server 210 may identify synthetic audio incorporating unauthorized samples, voices, or compositions, thereby mitigating risks associated with copyright infringement. By enforcing compliance with applicable intellectual property laws and user agreements, the detection of synthetic audio content may mitigate legal liabilities arising from the distribution of infringing content.

In some implementations, detection of synthetic audio content may be used to optimize resource utilization by reducing the storage and bandwidth consumed by synthetic audio. By filtering out low-value and/or fraudulent content, the platform server 210 can allocate resources more effectively by prioritizing high-quality content from genuine creators. Detection of synthetic audio content may contribute to a more efficient management of the music platform's technical and economic resources.

In some implementations, detection of synthetic audio content may be performed by detecting anomalies and/or patterns indicative of synthetic generation. For example, the platform server 210 may be configured to identify AI-generated signatures specific to synthetic audio tools and/or AI-generated signatures specific to a specific synthetic audio tool.

### Processing pipelines

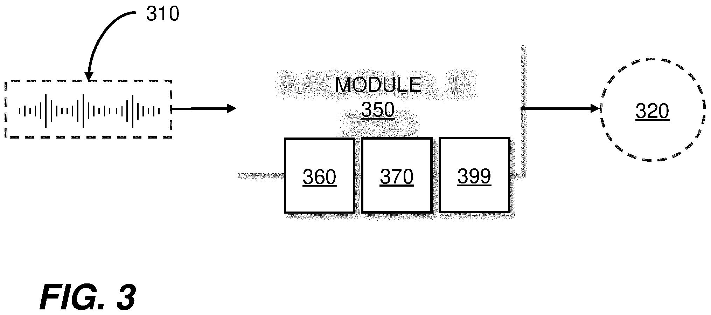

With reference to FIG. 3, there is depicted a computer-implemented module 350 configured to acquire a candidate audio signal 310 and generate a classification output 320 indicative of whether the candidate audio signal 310 is human-made or synthetically generated.

In some embodiments, the computer-implemented module 350 may be configured to execute a time-domain audio signal processing pipeline 360 on the audio signal 310 for classifying the audio signal 310 as human-made or synthetically generated. In other embodiments, the computer-implemented module 350 may be configured to execute a frequency-domain audio signal processing pipeline 370 on the audio signal 310 for classifying the audio signal 310 as human-made or synthetically generated. In further embodiments, the computer-implemented module 350 may be configured to execute both the time-domain and the frequency-domain audio signal processing pipelines 360 and 370 for classifying the audio signal 310 as human-made or synthetically generated.

It is contemplated that one or more additional processing operations 399 may be performed by the computer-implemented module 350 for classifying the audio signal 310 as human-made or synthetically generated. In some embodiments, the processor 110 may be configured to, at least one of: normalize the audio signal 310, filter the audio signal 310, equalize the audio signal 310, convert the audio signal 310 from stereo format to mono format, convert the audio signal 310 from mono format to stereo format (e.g., duplicated on two channels), resample the audio signal 310 from a first sample rate to a second sample rate (e.g., 48kHz to 44.1kHz), convert the audio signal 310 to a different audio codec, transform the audio signal 310 from a first compression rate to a second compression rate (e.g., MP3 128Kbps).

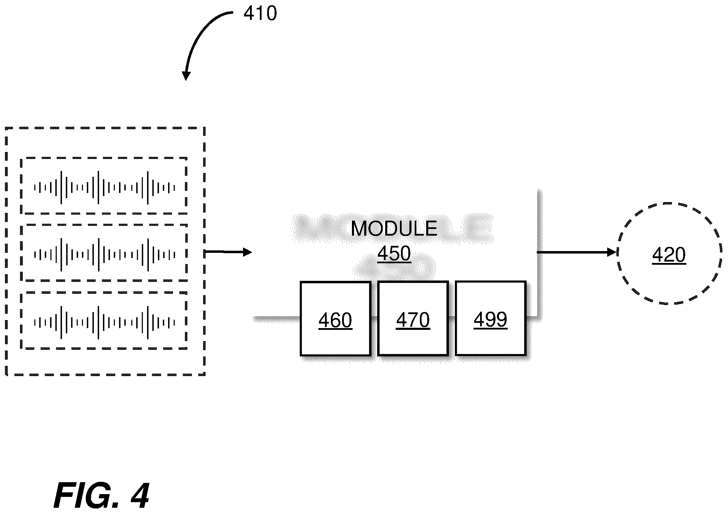

With reference to FIG. 4, there is depicted an other computer-implemented module 450 configured to acquire a plurality of candidate audio signals 410 originating from a given (same) audio content provider and generate a classification output 420 indicative of whether the given audio content provider employed an AI-generation tool for generating at least some audio content from the plurality of candidate audio signals 410. It is contemplated that the classification output 420 may be further indicative of at least one characteristic of the AI-generation tool potentially used for generating at least some audio content from the plurality of candidate audio signals 410.

In some embodiments, the processor 110 may be configured to determine that one or more from the plurality of audio signals 410 come from a same AI-generation model (and/or a same version thereof). It is contemplated that the processor 110 may be configured to determine at least one characteristic of the architecture of the AI-generation model, based on an analysis of the one or more from the plurality of audio signals such as, but not limited to, one or more stride parameters used in successive deconvolution layers of the AI-generation model, type of AI architecture of the AI-generation model.

In some embodiments, the other computer-implemented module 450 may be configured to execute a time-domain audio signal processing pipeline 460 on the plurality of audio signals 410 for determining potential use of AI-generated tool(s) by a given audio content provider and/or at least one characteristic of an AI-generated tool used for generating at least some audio content from the plurality of audio signals 410. In other embodiments, the other computer-implemented module 450 may be configured to execute a frequency-domain audio signal processing pipeline 470 on the plurality of audio signals 410 for determining potential use of AI-generated tool(s) by a given audio content provider and/or at least one characteristic of an AI-generated tool used for generating at least some audio content from the plurality of audio signals 410. In further embodiments, the other computer-implemented module 450 may be configured to execute both the time-domain and the frequency-domain audio signal processing pipelines 460 and 470 for determining potential use of AI-generated tool(s) by a given audio content provider and/or at least one characteristic of an AI-generated tool used for generating at least some audio content from the plurality of audio signals 410,

It is contemplated that one or more additional processing operations 499 may be performed by the other computer-implemented module 450 for determining potential use of AI-generated tool(s) by a given audio content provider and/or at least one characteristic of an AI-generated tool used for generating at least some audio content from the plurality of audio signals 410. In some embodiments, the processor 110 may be configured to, at least one of: normalize one or more of the plurality of audio signals 410, filter one or more of the plurality of audio signals 410, equalize one or more of the plurality of audio signals 410, convert one or more of the plurality of audio signals 410 from stereo format to mono format, convert one or more of the plurality of audio signals 410 from mono format to stereo format (e.g., duplicated on two channels), resample one or more of the plurality of audio signals 410 from a first sample rate to a second sample rate (e.g., 48kHz to 44.1kHz), convert one or more of the plurality of audio signals 410 to a different audio codec, transform one or more of the plurality of audio signals 410 from a first compression rate to a second compression rate (e.g., MP3 128Kbps).

Developers of the present technology have realized that one or more audio signal processing techniques disclosed herein may generalizable and/or adapted for use with a variety of learning representation techniques. In some embodiments, the processor 110 may be configured to employ at least one of Singular Value Decomposition (SVD) and Principal Component Analysis (PCA) for generating one or more clusters of audio signals and where each where audio signals in a given cluster are generated by a same AI-generation model (and/or version thereof). Broadly speaking, SVD and PCA are computational techniques for dimensionality reduction, data transformation, and feature extraction in multi-dimensional datasets. SVD decomposes a matrix into three components: orthogonal left singular vectors, diagonal matrix of singular values, and orthogonal right singular vectors. This decomposition facilitates matrix approximation, noise reduction, and/or optimization in linear algebra operations performed by the processor 110. PCA identifies orthogonal principal components, which represent directions of maximum variance within a dataset. By projecting data onto these components, PCA reduces dimensionality while preserving variance for efficient analysis and visualization. PCA can implemented via eigenvalue decomposition or leveraging SVD for computational efficiency of the processor 110. In some embodiments, SVD and PCA techniques can be employed for at least one of signal processing, machine learning, and pattern recognition on audio content.

For example, a first cluster may be indicative of a first sub group of audio signals generated by a first AI-generation model (and/or version thereof), and a second cluster may be indicative of a second sub group of audio signals generated by a second AI-generation model (and/or version thereof). In an other example, a first cluster may be indicative of a first sub group of audio signals generated by a first version of a given AI-generation model, and a second cluster may be indicative of a second sub group of audio signals generated by a second version of the given AI-generation model. It is contemplated that one or more audio signal processing techniques disclosed herein may be applied on audio content generated by different types of models, and/or be applied to identify an *apriori* unknown model that generated audio content.

Developers of the present technology have devised time-domain and frequency-domain signal processing pipelines for identifying and using "checkerboard" artifacts in the audio content during the classification process.

Broadly speaking, checkerboard artifacts are an issue in synthetic image data generated by AI generators (e.g., VAE, GANs, diffusion models), especially when using some types of up sampling techniques. These artifacts can appear as unintended, grid-like patterns across a generated image, which resemble a checkerboard pattern. Formally, errors in learning the weight and/or bias parameters of the deconvolution operation will be tiled as a periodic signal with a period equal to the chosen architecture of the AI-generator (e.g., the stride parameter). Errors from lower layers can also permeate in upper layers and which may have been upsampled in that process. It can be said that the checkerboard artifact is a superposition of many small periodic errors coming from all the deconvolution operations of a given AI-generation model. Developers have realized that detection of the checkerboard artifact may be performed by analyzing audio content for existence of periodic signals that are present consistently throughout an audio signal. Although some techniques exist for reducing the checkerboard effect and making it inaudible to the human ear, at least some indicators of the checkerboard artifact may still remain in the audio content.

Developers of the present technology have realised that the checkerboard artefact may not have temporal continuity and may depend only on the index position. In at least some embodiments of the present technology, there is devised a detection solution that use a measure of discontinuity in a candidate audio signal for determining whether the candidate audio signal is synthetically generated.

It should be noted that human-made audio signals are often composed of many notes, evolving harmonies, complex instruments and voice timber. In contrast, the checkerboard artifact may be present throughout a synthetic audio signal and is composed of several periodic errors of an *apriori* unknown period (since the AI-generator architecture may also be *apriori* unknown).

Without wishing to be bound to any specific theory, a synthetic audio signal may be defined as *S* = *S* * + ε, where *S* * is an optimised audio signal, and *ε* is a periodic additive from deconvolution errors. The detection solution may be configured to average consecutive patches of the audio signal. The consecutive patches may be selected with one or more periods (e.g., patch size) during the averaging process. In natural audio content, averages of consecutive patches throughout several seconds and/or even minutes should generally lead to a null vector, due to the presence of a large variety of frequencies, linked to the interference between many notes and sound textures in a song. In synthetic audio content, *ε* should lead to non-null averages when considering patches of size equal to an error period and/or its harmonics (e.g., the untiled bias error in the deconvolution). As a result, when averaging synthetic signals *S*, the *S* * term may tend to a null vector, while the *ε* part should be a non-null vector for patches matching specific periods in the signal indicative of synthetic generation. In other words, developers have realized that a range of possible patch periods may be tested for verifying if averaging outputs always tend toward null values (and therefore the audio content is likely to be natural), or non-null residuals appear for some specific patch periods (and therefore the audio content is likely to be synthetic).

### Time-domain processing pipeline

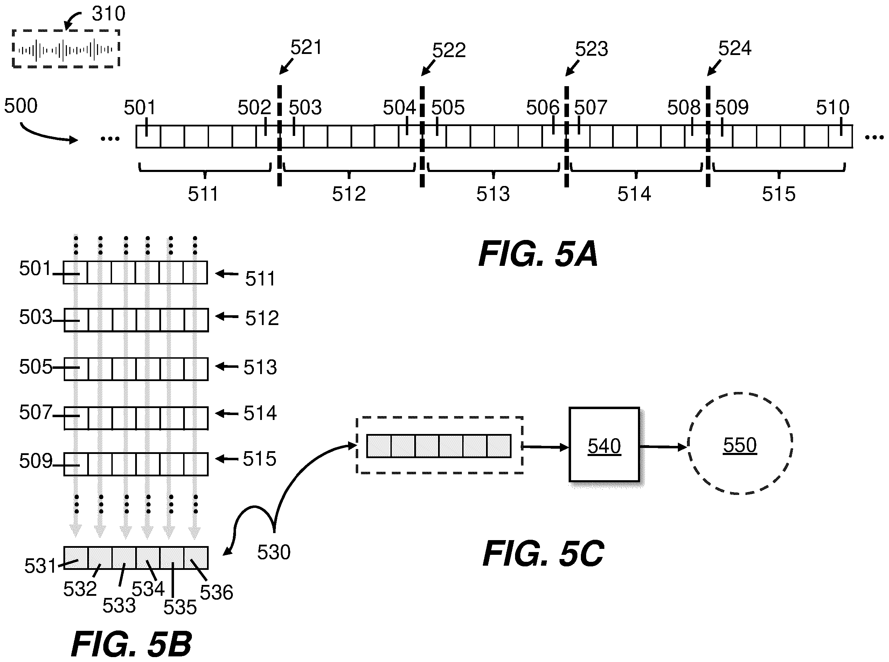

With reference to FIGS 5A, 5B, and 5C, there is depicted a time-domain processing pipeline executable by the processor 110 of the computer system 100. The processor 100 is configured to acquire the candidate audio signal 310.

In FIG. 5A, there is depicted a plurality of audio values 500 from the candidate audio signal 310. For example, audio value 500 in the plurality of audio values may represent respective amplitude values of the audio signal 310. It is contemplated that the plurality of audio values 500 may comprise audio values from one or more channels of the audio signal 310. In this example, the plurality of audio values 500 is a temporal sequence of audio values from the candidate audio signal 310. It should be noted that the plurality of audio values 500 may comprise additional audio values to those illustrated in FIG. 5A. In can also be said that the plurality of audio value 500 illustrated in FIG. 5A are only some of the audio values of the audio signal 310, without departing from the scope of the present technology

For example, the plurality of audio values 500 comprises respective audio values 501, 502, 503, 504, 505, 506, 507, 508, 509, and 510. As seen in this example, the audio values 502 and 503 are immediately sequential audio values from the plurality of audio values 500, the audio values 504 and 505 are immediately sequential audio values from the plurality of audio values 500, the audio values 506 and 507 are immediately sequential audio values from the plurality of audio values 500, and the audio values 508 and 509 are immediately sequential audio values from the plurality of audio values 500.

The processor 110 is configured to generate a set of patches using the plurality of audio values 500. In this example, the set of patches comprises patches 511, 512, 513, 514, and 515 delimited by patch indicators 521, 522, 523, and 524, respectively. In this example, each of the patches 511, 512, 513, 514, and 515 from the set of patches includes six respective audio values from the plurality of audio values 500. In other embodiments, the processor 110 may be configured to use a different pre-determined number as a patch size during the generation of patches from the set of patches. For example, the processor 110 may use a patch size equal to seven, eight, nine, ten, and so forth, for generating a set of patches with corresponding numbers of audio values from the plurality of audio values 500.

In this example, a first patch 511 begins with the audio value 501 and ends with the audio value 502, a second patch 512 begins with the audio value 503 and ends with the audio value 504, a third patch 513 begins with the audio value 505 and ends with the audio value 506, a fourth patch 514 begins with the audio value 507 and ends with the audio value 508, and a fifth patch 515 begins with the audio value 509 and ends with the audio value 510. It should be noted that, in this example, audio values in a given patch are mutually exclusive from audio values in other patches from the set of patches. It should be noted that, in this example, audio values in a given patch are sequential to audio values in other patches from the set of patches.

With reference to FIG. 5B, the processor 110 is configured to generate a combined patch 530 using the set of patches including the first patch 511, the second patch 512, the third patch 513, the fourth patch 514, and the fifth patch 515. During generating of the combined patch 530, the processor 110 is configured to generate combined values in the combined patch based on respective audio values from the set of patches. In this example, the processor 110 is configured to generate a first combined value 531 using (i) the audio value 501 from the first patch 511, (ii) the audio value 503 from the second patch 512, (iii) the audio value 505 from the third patch 513, (iv) the audio value 507 from the fourth patch 514, and (v) the audio value 509 from the fifth patch 515. It should be noted that the audio values from the set of patches used to generate the first combined value 531 share a same position within respective ones from the set of patches. Similarly, the processor 110 is configured to generate a second combined value 532 using audio values from the set of patches that share a second position within respective ones from the set of patches, a third combined value 533 using audio values from the set of patches that share a third position within respective ones from the set of patches, a fourth combined value 534 using audio values from the set of patches that share a fourth position within respective ones from the set of patches, a fifth combined value 535 using audio values from the set of patches that share a fifth position within respective ones from the set of patches, and a sixth combined value 536 using audio values from the set of patches that share a sixth position within respective ones from the set of patches.

In some embodiments, the processor 110 may be configured to generate a given combined value as an average value of corresponding audio values from the set of patches. In other embodiments, the processor 110 may be configured to generate a given combined value as a mean value of corresponding audio values from the set of patches. In further embodiments, the processor 110 may be configured to generate a given combined value as a median value of corresponding audio values from the set of patches.

In some embodiments of the present technology, the processor 110 may be configured to generating a plurality of combined patches for a given audio signal, each one being associated with a respective patch size used to split the given audio signal. For example, the processor 110 may be configured to generate a first combined patch based on a given audio signal being split using a first patch size, the processor 110 may be configured to generate a second combined patch based on a given audio signal being split using a second patch size, and so forth.

In some cases, the combined patch 530 may be used for performing classification. In other cases, a plurality of combined patches generated for different patch sizes may be referred to herein as a "fingerprint" of the candidate audio signal. It should be noted that the processor 110 may be configured to generate a plurality of combined patches for the candidate audio signal 310 where each one within the plurality of combined patches is generated for a corresponding patch size. In this example, the combined patch 530 is generated for a patch size equal to six. In other examples, the processor 110 may be configured to generate a set of combined patches with (i) a first combined patch corresponding to a patch size equal to six, (ii) a second combined patch corresponding to a patch size equal to eight, (iii) a third combined patch corresponding to a patch size equal to ten, (iv) a fourth combined patch corresponding to a patch size equal to twelve, (v) a fourth combined patch corresponding to a patch size equal to thirty, (vi) and so forth.

It is contemplated that the processor 110 may be configured to generate a plurality of combined patches including a pre-determined number of combined patches and for a plurality of pre-determined patch sizes. In such embodiments, the processor 110 may be configured to input the plurality of combined patches into the sub-module 540 for determining whether or not any of the plurality of combined patches generated for the candidate audio signal 310 is indicative of synthetic audio content. For example, if at least one of the plurality of combined patches 310 is indicative of synthetic audio content, the processor 110 may be configured to classify the candidate audio signal 310 as a synthetic audio signal.

With reference to FIG. 5C, the processor 110 is configured to input the combined patch 530 to a sub-module 540 for generating a classification output 550. As it will become apparent from the description herein further below, the sub-module 540 may be a computer-implemented sub-module executable by the processor 110 and may comprise one or more functions and/or one or more machine learning algorithms configured to process one or more combined patches (similar to the combined patch 530) and perform a classification task on the candidate audio signal 310 using the one or more combined patches.

In some embodiments, the sub-module 540 may comprise a normalization function configured to normalize the combined patch 530 and/or a fingerprint of the audio signal 310 (e.g., the plurality of combined patches generated for the audio signal 310). The normalization function can be employed by the processor 110 for ameliorating a classification task, and/or perform specific transformation of a given audio signal during the rest of a signal processing technique. For instance, a combined patch may be normalised by dividing values thereof by a max values amongst the values thereof.

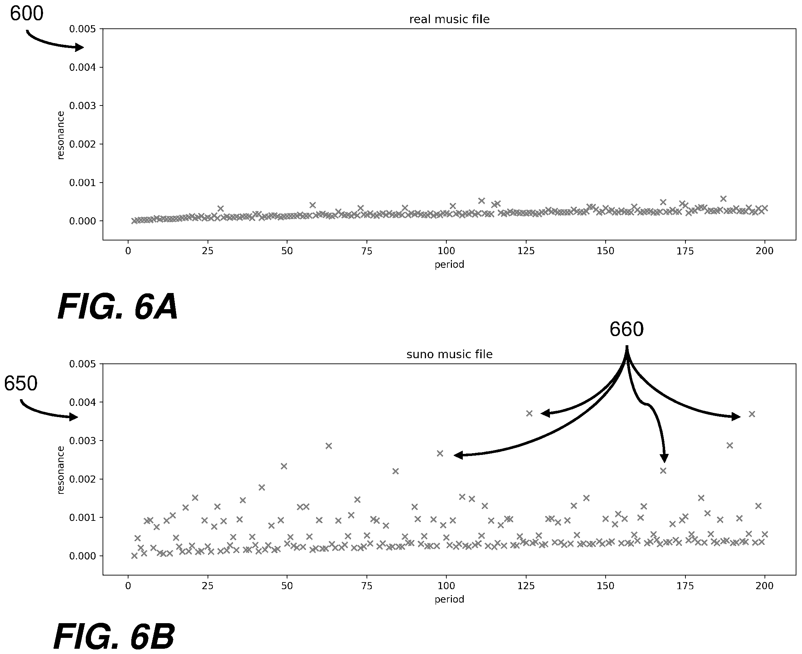

In other embodiments, the sub-module 540 may comprise a function configured to determine variance within values in the combined patch 530 and/or the fingerprint of the audio signal 310 (e.g., the plurality of combined patches generated for the audio signal 310). Since the periodic residual *ε* is likely to be discontinuous and non-null, a function may be employed to summarise both these characteristics (discontinuity and non-nullness) into a single number, for a given chosen patch size of a combined patch. Developers call that number the "resonance" of a combined patch. For instance, the average absolute difference between successive values may be computed by the processor 110. Alternatively, the Lipschitz constant of the combined patch sequence may be computed. Then, multiple combined patches with different patch size (i.e., period) may be collected, summarised with this function, and listed together to form a "fingerprint" (see. FIGS 6A and 6B). In some embodiments, the fingerprint may be indicative of the resonance values of a plurality of combined patches that have been computed with different patch size parameters (i.e.,the period). A logistic regression may be employed by the processor 110 on a given fingerprint to estimate the probability that the given fingerprint represents a synthetic or real audio signal. It should be noted that the output of the function may be compared to a pre-determined threshold. In this example, the classification output 550 may depend on whether the output of the function is above, or below, the pre-determined threshold.

In other embodiments, the sub-module 540 may comprise a Neural Network (NN). In some embodiments, the NN of the sub-module 540 may be configured for binary classification of vector inputs. The NN may comprise an input layer, one or more hidden layers, and an output layer, each layer being operatively coupled to perform classification based on the input data. The input layer is structured to receive a vector input (e.g., one or more combined patches), wherein each node in the input layer corresponds to a distinct feature of the input vector. The dimensionality of the input layer is determined by the number of features in the input data, thereby allowing the system to process the required information effectively.

The one or more hidden layers are configured to process the input data through a plurality of interconnected nodes. Each node in a hidden layer applies an activation function, such as a Rectified Linear Unit (ReLU), to introduce non-linear transformations, enabling the NN to learn complex relationships within the input data. The number of nodes and hidden layers is adjustable and may be selected based on the complexity of the classification task. To prevent overfitting and enhance generalization, regularization techniques, such as dropout or weight decay, for example, may be implemented within the hidden layers.

The output layer is configured with a single node that applies a sigmoid activation function, resulting in an output value representing a probability between 0 and 1. This output probability corresponds to the likelihood that the input vector belongs to a predefined positive class (e.g, synthetic audio signal). A predetermined threshold, such as 0.5, for example, may be applied to the output probability to determine the binary classification result, mapping the probability to either class 0 or class 1.

It is contemplated that the NN may be trained using a supervised learning approach. The training process can minimize a binary cross-entropy loss function, for example, which quantifies the divergence between predicted probabilities and true class labels. An optimization algorithm, such as Stochastic Gradient Descent (SGD), for example, may be employed to iteratively adjust the weights of the NN using backpropagation. This process may allow convergence of the model toward an optimal set of parameters for accurate classification.

The NN may be evaluated using performance metrics, including accuracy, precision, recall, and/or F1-score, to assess its efficacy on unseen data. Additionally, techniques such as cross-validation and hyperparameter tuning may be employed to refine the architecture and training process, thereby optimizing the system's performance for binary classification tasks.

In at least some non-limiting embodiments of the present technology, the processor 110 may be configured to perform time-domain audio signal processing of the candidate audio signal 310 using a logic expressed in, or equivalent to, the following pseudo-code.

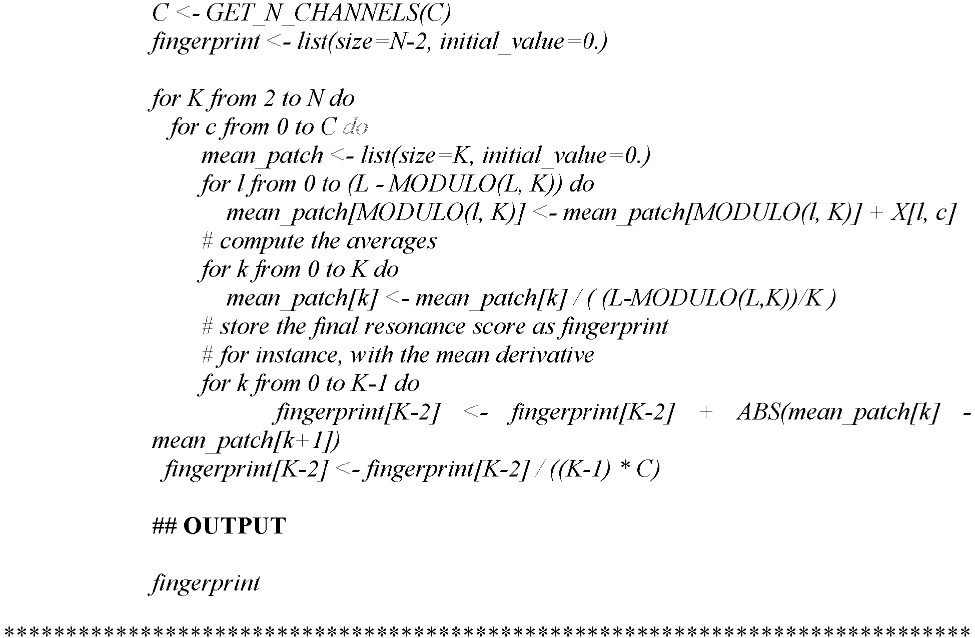

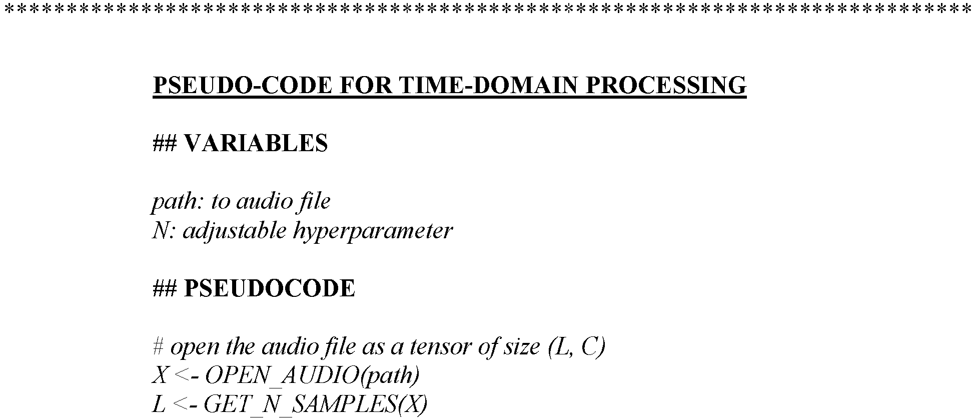

It should be noted that in accordance with this non-limiting example of a pseudo-code representing operations executed by the processor 110, the processor 110 can be configured to compute combined patches of variable sizes (ranging from 2 to K), and each of the K-2 computed combined patches can be transformed by the processor 110 into a corresponding value using a given function for capturing discontinuity information. In this case, the fingerprint represents the corresponding values, sometimes referred to herein as "resonance", and which are based on the size of the patches chosen to create each corresponding combined patch.

With reference to FIG. 6A, there is depicted a graphical illustration 600 generated by the process 110 for a natural/human-made audio signal using time-domain audio signal processing. With reference to FIG. 6B, there is depicted a graphical illustration 650 generated by the process 110 for a synthetic audio signal using time-domain audio signal processing. As seen, the graphical illustration 650 includes a plurality of outliers, including at least outliers 660, which are indicative of synthetic generation of the audio content.

It should be noted that since a profile of a fingerprint depends on the architecture of a potential AI-generator, analyzing the resonances in respective fingerprints may be employed by the processor 110 to determine a given AI-model (and/or a given version thereof) employed to generate the candidate audio signal 310 and/or one or more from the plurality of audio signals 410. In some embodiments, the processor 110 may be configured to analyze one or more candidate audio signals for checking which of the one or more candidate audio signals have been generated using a target AI-generator by storing and/or learning a corresponding fingerprint(s) that the target AI-generator produces. Unknown AI-generators may be detected by finding suspicious fingerprints with multiple resonances that do not align with real signals.

In at least some embodiments of the present technology, the processor 110 may be configured to make use of one or more stored fingerprints and/or one or more candidate fingerprints for executing zero-shot detection of AI-generators. Broadly, zero-shot detection is a machine learning approach that enables a model to detect and classify objects it has not explicitly encountered during training. Instead of relying solely on labeled data for specific classes, the model utilizes auxiliary knowledge, such as semantic embeddings, textual descriptions, or relationships between known and unknown categories, to generalize to unseen classes. This method allows for the recognition of new classes based on their similarities or conceptual relationships to those already learned, making it highly applicable in situations where collecting labeled data for all possible classes is impractical.

Developers have realised that time-domain processing described above is well-suited for identifying synthetic audio content in which particular periodical artifacts can be detected. However, developers have also devised detection systems for detecting synthetic audio content where sampling period resonance is not equal to an integer.

In one non-limiting example, a given audio signal may have been resampled from 44.1kHz to 48kHz. In this non-limiting example, an originally resonant period of "10", for example, will be converted to a resonant period of "10.8" (10*48/44.1), and which is no longer an integer. In this non-limiting example, other detection systems can be designed for detecting synthetic audio content for handling continuous resonances.

In at least some other embodiments of the present technology, there is provided a detection system configured to operate on spectral representations of audio signals, as opposed to time-domain representations (such as the plurality of audio values 500, for example).

Without wishing to be bound to any specific theory, during the frequency-domain audio signal processing technique, a local "fingerprint" of resonant frequencies (a short-time Fourier transform) is computed, and then one or more combination operations are performed (e.g., averaging). It should be noted that such a process may result in the residual resonant error spectrum *ε* be detectable relative to the combined/averaged spectrogram information. It is contemplated that having a comparatively more fine-grained representation (e.g., comparatively more values) may be aid in increasing detection performance. How the frequency domain processing can be performed by the processor 110 will now be described in greater details.

### Frequency-domain processing pipeline

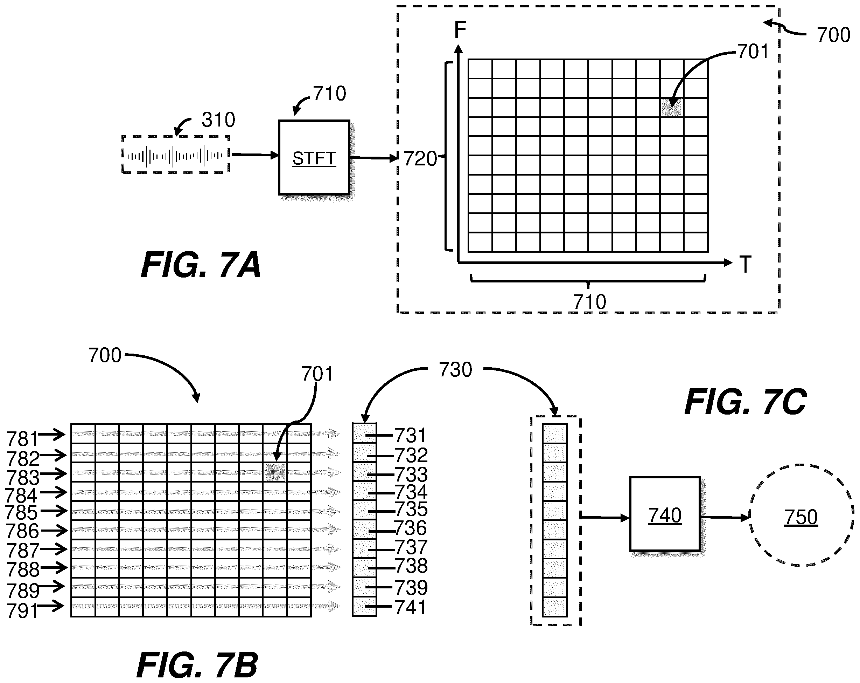

With reference to FIGS. 7A, 7B, and 7C, there is depicted a frequency-domain processing pipeline executable by the processor 110 of the computer system 100. The processor 110 is configured to acquire the candidate audio signal 310.

With reference to FIG. 7A, the processor 110 is configured to apply a STFT function 710 onto the candidate audio signal 710 for generating a spectrogram 700. In this embodiment the processor 110 employs a STFT function configured to process audio signals. During this process, the candidate audio signal 310 can be divided into overlapping or nonoverlapping segments, each segment being multiplied by a windowing function such as a Hamming, Hanning, or Blackman window, for example, to reduce spectral leakage. For each segment, the STFT function 710 computes the Fourier transform, yielding a frequency domain representation of the signal's amplitude and phase over time. The outputs of the STFT function 710 for all segments are then assembled to form the spectrogram 700, where the time axis corresponds to the signal segments, the frequency axis corresponds to the computed frequency components.

The magnitude of each component can be represented as intensity, color, and/or a corresponding value for a given time-frequency pair. For example, an amplitude value 701 corresponds to (i) a given time value and/or time interval of a time length 710, and (ii) a given frequency value and/or frequency interval of a frequency bandwidth 720.

Additional or alternatively, other signal processing techniques than STFT may be used to generate a given spectrogram from the candidate audio signal 310. In one embodiment, the processor 110 may employ a Wavelet Transform (WT), which employs wavelet basis functions to analyze the signal at multiple scales, providing a time-frequency representation with an adaptive resolution. In a further embodiment, the processor 110 may employ a Wigner-Ville (WV) distribution, which computes a quadratic time-frequency distribution for improved energy localization. In an additional embodiment, the processor 110 may be configured to generate a Mel-spectrogram, which combines the STFT method with a Mel filterbank to transform the frequency axis into a perceptually relevant scale, commonly used in audio and speech processing. In yet an other embodiment, the processor 110 may employ a Continuous Wavelet Transform (CWT), which provides high-resolution time-frequency representations, and/or a Discrete Fourier Transform (DFT) applied to uniformly segmented windows for less computationally intensive implementations. The choice of the transform or processing function may depend on *inter alia a* specific application of the present technology, and/or a desired resolution, computational efficiency, and frequency localization properties. These methods may be implemented individually, or in combination, to optimize spectrogram generation for various use cases.

With reference to FIG. 7B, the processor 110 is configured to generate a frequency-based combined patch 730 based on the spectrogram 700. In this example, it can be said that:
- a first combined value 731 in the frequency-based combined patch 730 is a combined value of values in the spectrogram 700 associated (i) a first frequency value 781 and/or a first frequency interval of the frequency bandwidth 720 and (ii) different time values and/or different time intervals of the time length 710;
- a second combined value 732 in the frequency-based combined patch 730 is a combined value of values in the spectrogram 700 associated (i) a second frequency value 782 and/or a second frequency interval of the frequency bandwidth 720 and (ii) different time values and/or different time intervals of the time length 710;
- a third combined value 733 in the frequency-based combined patch 730 is a combined value of values in the spectrogram 700 associated (i) a third frequency value 783 and/or a third frequency interval of the frequency bandwidth 720 and (ii) different time values and/or different time intervals of the time length 710;
- a fourth combined value 734 in the frequency-based combined patch 730 is a combined value of values in the spectrogram 700 associated (i) a fourth frequency value 784 and/or a fourth frequency interval of the frequency bandwidth 720 and (ii) different time values and/or different time intervals of the time length 710;
- a fifth combined value 735 in the frequency-based combined patch 730 is a combined value of values in the spectrogram 700 associated (i) a fifth frequency value 785 and/or a fifth frequency interval of the frequency bandwidth 720 and (ii) different time values and/or different time intervals of the time length 710;
- a sixth combined value 736 in the frequency-based combined patch 730 is a combined value of values in the spectrogram 700 associated (i) a sixth frequency value 786 and/or a sicth frequency interval of the frequency bandwidth 720 and (ii) different time values and/or different time intervals of the time length 710;
- a seventh combined value 737 in the frequency-based combined patch 730 is a combined value of values in the spectrogram 700 associated (i) a seventh frequency value 787 and/or a seventh frequency interval of the frequency bandwidth 720 and (ii) different time values and/or different time intervals of the time length 710;
- an eighth combined value 738 in the frequency-based combined patch 730 is a combined value of values in the spectrogram 700 associated (i) an eighth frequency value 788 and/or an eighth frequency interval of the frequency bandwidth 720 and (ii) different time values and/or different time intervals of the time length 710;
- a ninth combined value 739 in the frequency-based combined patch 730 is a combined value of values in the spectrogram 700 associated (i) a ninth frequency value 789 and/or a ninth frequency interval of the frequency bandwidth 720 and (ii) different time values and/or different time intervals of the time length 710; and
- a tenth combined value 741 in the frequency-based combined patch 730 is a combined value of values in the spectrogram 700 associated (i) a tenth frequency value 791 and/or a tenth frequency interval of the frequency bandwidth 720 and (ii) different time values and/or different time intervals of the time length 710.

In some embodiments, the processor 110 may be configured to generate a given combined value from the frequency-based combined patch 730 as an average value of corresponding values from the spectrogram 700. In other embodiments, the processor 110 may be configured to generate a given combined value from the frequency-based combined patch 730 as a mean value of corresponding values from the spectrogram 700. In further embodiments, the processor 110 may be configured to generate a given combined value from the frequency-based combined patch 730 as a median value of corresponding values from the spectrogram 700.

In some embodiments values for a given FFT bin and along time axis can be averaged. In this example, the dimension of the combined vector 730 may be the same as the number of FFT bins of the STFT function 720 (e.g., a configurable parameter n_fft when computing a STFT results in n_fft/2 + 1 bins). In this example, the combined vector 730 may also have n_fft/2 + 1 coordinates.

With reference to FIG. 7C, the processor 110 is configured to input frequency-based combined patch 730 to a sub-module 740 for generating a classification output 750. As it will become apparent from the description herein further below, the sub-module 740 may be a computer-implemented sub-module executable by the processor 110 and may comprise one or more functions and/or one or more machine learning algorithms configured to process one or more frequency-based combined patches (similar to the frequency-based combined patch 730) and perform a classification task on the candidate audio signal 310 using the one or more combined patches.

In some embodiments, the sub-module 740 may comprise a normalization function configured to normalize the frequency-based combined patch 730. In some embodiments, the input frequency-based patch may be normalised by subtracting its lower "hull". Indeed, since audio signals can be expected to exhibit a plurality of evolving frequencies, a combined patch may be rather continuous and does not exhibit salient frequencies. The lower hull may be defined as an interpolation of the local minima of the patch on sliding windows. The purpose of this normalisation is to push forward punctual anomalous frequency spikes while setting normal continuous values of the patch to 0. In other embodiments, the sub-module 740 may comprise a function configured to determine variance within values in the frequency-based combined patch 730. It should be noted that the output of the function may be compared to a pre-determined threshold. In this example, the classification output 750 may depend on whether the output of the function is above, or below, the pre-determined threshold. In other embodiments, the sub-module 740 may comprise a Neural Network (NN). In some embodiments, the NN of the sub-module 740 may be configured for binary classification of vector inputs.

In at least some non-limiting embodiments of the present technology, the processor 110 may be configured to perform frequency-domain audio signal processing of the candidate audio signal 310 using a logic expressed in, or equivalent to, the following pseudo-code.

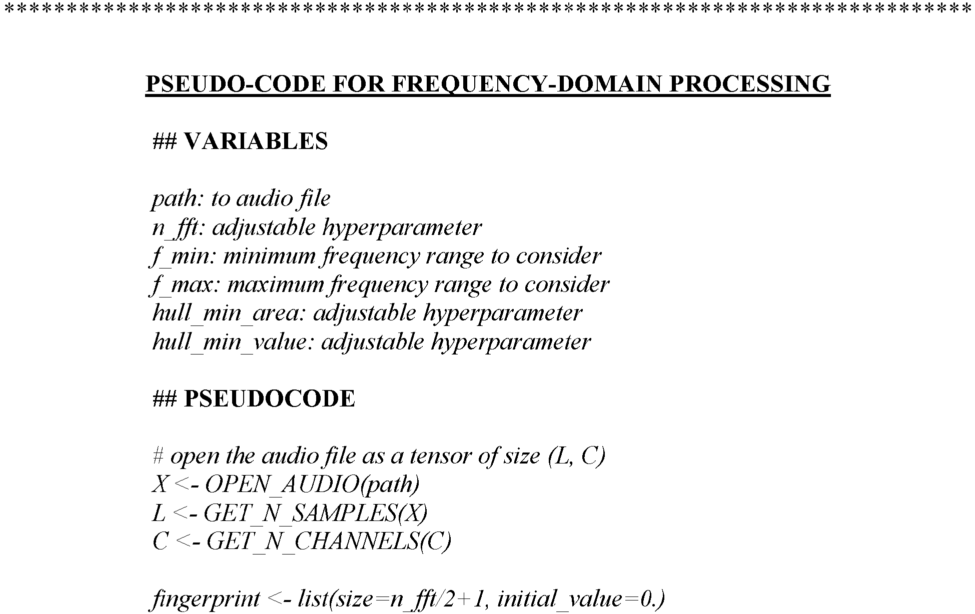

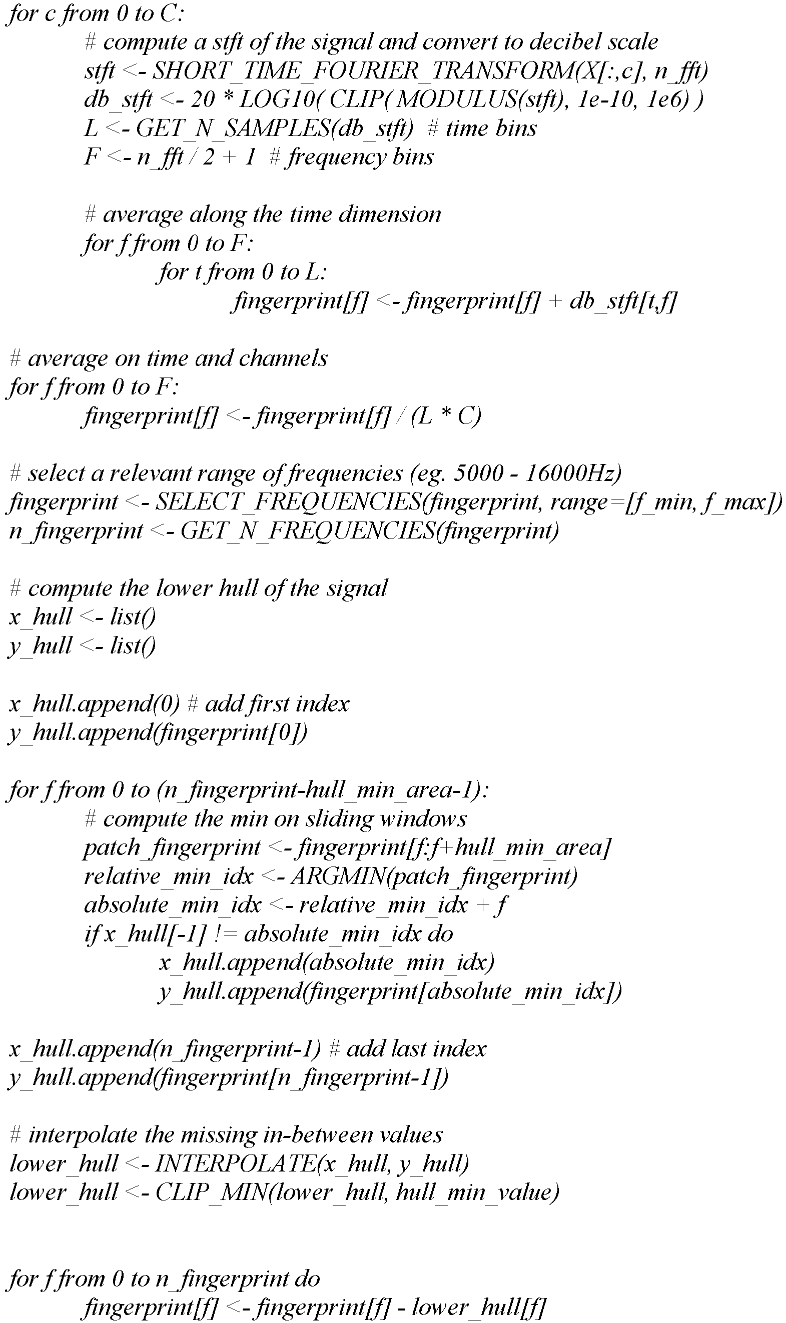

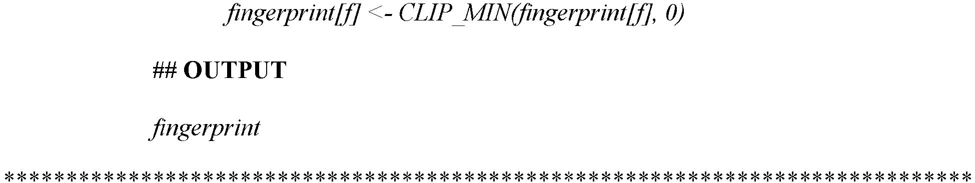

It should be noted that in accordance with this non-limiting example of a pseudo-code representing operations executed by the processor 110, the processor 110 is configured to normalize the combined patches by subtracting its lower hull, in order to normalise that the values expected for real signals should be close to 0, while synthetic signals should exhibit punctual spikes due to the presence of checkerboard artefacts.

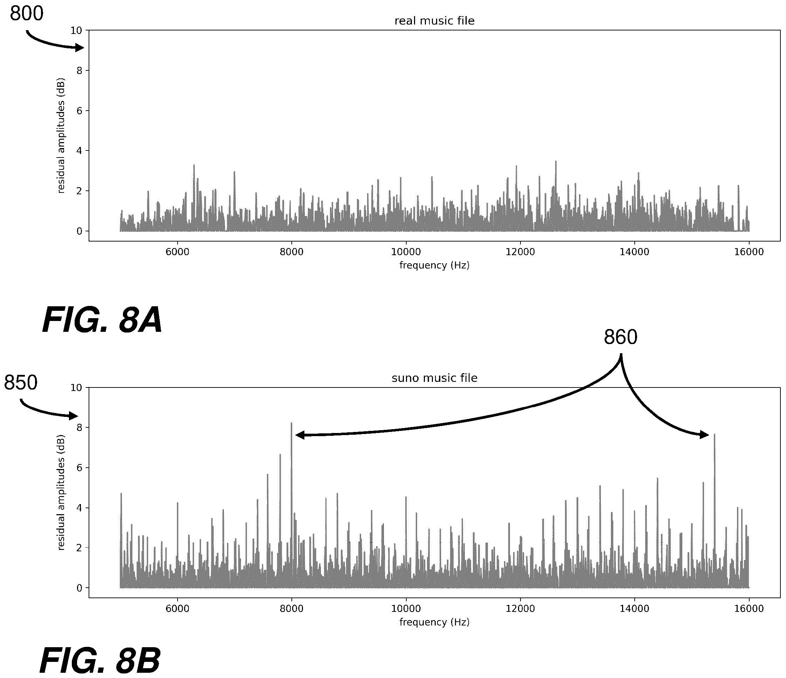

With reference to FIG. 8A, there is depicted a graphical illustration 800 generated by the process 110 for a natural/human-made audio signal using frequency-domain audio signal processing. With reference to FIG. 8B, there is depicted a graphical illustration 850 generated by the process 110 for a synthetic audio signal using frequency-domain audio signal processing. As seen, the graphical illustration 850 includes a plurality of outliers, including at least outliers 860, which are indicative of synthetic generation of the audio content. In FIGS 8A and 8B, a bandwidth of frequencies is displayed between 5000Hz and 16000Hz, for which STFT amplitudes have been computed and aggregated into a combined patch, converted to decibel scale, then normalised by subtracting the lower hull. This results in residual amplitudes that should have a limited range for real signals (due to approximations errors and noise), while synthetic signals exhibit stronger spikes, such as the outlies 860, for example.

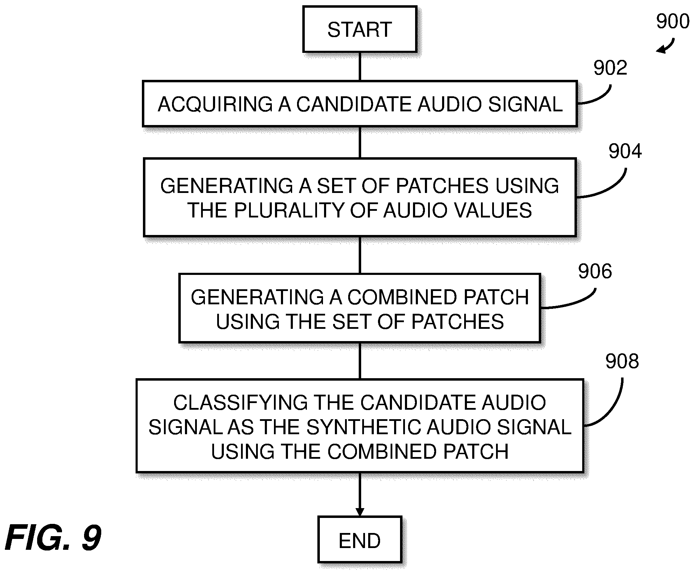

With reference to FIG. 9, there is depicted a scheme-block representation of a method 900 executable by the processor 110. It should be noted that one or more additional steps may be executed by the processor 110 to those non-exhaustively illustrated in FIG. 9. At least some steps of the method 900 as contemplated in the context of the present technology will now be described.

### STEP 902: ACQUIRING A CANDIDATE AUDIO SIGNAL

The method 900 begins with step 902 with the processor 110 configured to acquire the candidate audio signal 310. In some embodiments, one or more algorithms may be performed for modifying the candidate audio signal. For example, the processor 110 may be configured to normalize, equalize, modify format, modify sample ratio, and/or modify a compression ratio of the candidate audio signal 310.

More than one candidate audio signal may be acquired by the processor 110 for performing the method 900 on the one or more candidate audio signals, without departing from the scope of the present technology.

### STEP 904: GENERATING A SET OF PATCHES USING THE PLURALITY OF AUDIO VALUES

The method 900 continues to step 904 with the processor 110 configured to generate the set of patches comprises the patches 511, 512, 513, 514, and 515. In some embodiments, the processor 110 may be configured to employ a pre-determined patch size value for generating the set of patches including a pre-determined number of audio values. It is contemplated that a plurality of sets of patches may be generated for a plurality of pre-determined patch size values.

### STEP 906: GENERATING A COMBINED PATCH USING THE SET OF PATCHES

The method 900 continues to step 906 with the processor 110 configured to generate a combined patch 530 using the set of patches. In some embodiments, the processor 110 may be configured to generate a plurality of combined patches for a plurality of respective pre-determined patch sizes. The plurality of combined patch sizes may be used to generate a fingerprint for the candidate audio signal 310.

### STEP 908: CLASSIFYING THE CANDIDATE AUDIO SIGNAL AS THE SYNTHETIC AUDIO SIGNAL USING THE COMBINED PATCH

The method 900 continues to step 908 with the processor 110 configured to classify the candidate audio signal 310 as a synthetic audio signal using the combined patch 530. In some embodiments, the processor 110 may be configured to classify the candidate audio signal 310 using the fingerprint generated for the candidate audio signal 310. In other embodiments, the classification may be performed by the processor 110 configured to use a given NN.

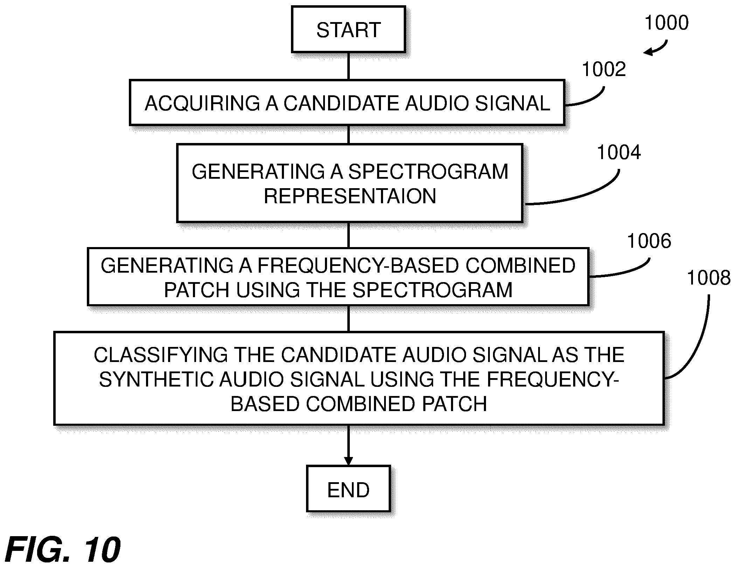

With reference to FIG. 10, there is depicted a scheme-block representation of a method 1000 executable by the processor 110. It should be noted that one or more additional steps may be executed by the processor 110 to those non-exhaustively illustrated in FIG. 10. At least some steps of the method 1000 as contemplated in the context of the present technology will now be described.

### STEP 1002: ACQUIRING A CANDIDATE AUDIO SIGNAL

The method 1000 begins with step 1002 with the processor 110 configured to acquire the candidate audio signal 310. In some embodiments, one or more algorithms may be performed for modifying the candidate audio signal. For example, the processor 110 may be configured to normalize, equalize, modify format, modify sample ratio, and/or modify a compression ratio of the candidate audio signal 310.

More than one candidate audio signal may be acquired by the processor 110 for performing the method 1000 on the one or more candidate audio signals, without departing from the scope of the present technology.

### STEP 1004: GENERATING A SPECTROGRAM REPRESENTAION

The method 1000 continues to step 1004 with the processor 110 configured to generate the spectrogram 700 based on the candidate audio signal 310. In some embodiments, the processor 110 may be configured to use the STFT function 710 for generating the spectrogram 700 based on the candidate audio signal 310. Other spectrogram generation techniques are contemplated. In some embodiments, the spectrogram 700 representation comprises values associated with respective frequency-time pairs.

### STEP 1006: GENERATING A FREQUENCY-BASED COMBINED PATCH USING THE SPECTROGRAM

The method 1000 continues to step 1006 with the processor 110 configured to generate the frequency-based combined patch 730 using the spectrogram 700. A given combined value in the frequency-based combined patch 730 is a combination of values from the spectrogram 700 sharing a same frequency coordinate and different time coordinates. In some embodiments, the processor 110 may be configured to generate a plurality of frequency-based combined patches for a given candidate audio signal.

### STEP 1008: CLASSIFYING THE CANDIDATE AUDIO SIGNAL AS THE SYNTHETIC AUDIO SIGNAL USING THE FREQUENCY-BASED COMBINED PATCH

The method 1000 continues to step 1008 with the processor 110 configured to classify the candidate audio signal 310 as the synthetic audio signal using the frequency-based combined patch 730. In some embodiments, the processor 110 may be configured to classify the candidate audio signal 310 using more than one frequency-based combined patch generated for the candidate audio signal 310. In other embodiments, the classification may be performed by the processor 110 configured to use a given NN.

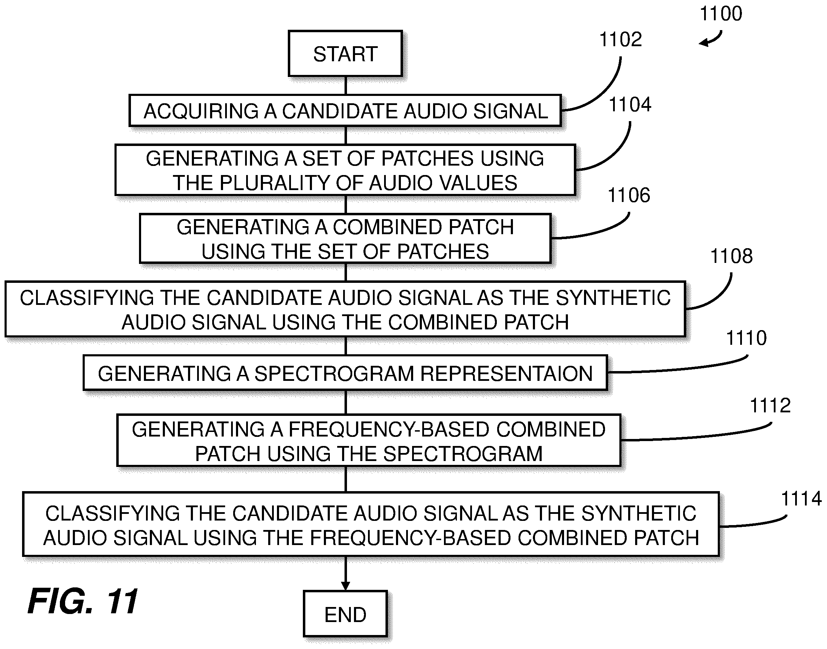

With reference to FIG. 11, there is depicted a scheme-block representation of a method 1100 executable by the processor 110. It should be noted that one or more additional steps may be executed by the processor 110 to those non-exhaustively illustrated in FIG. 11. At least some steps of the method 1100 as contemplated in the context of the present technology will now be described.

### STEP 1102: ACQUIRING A CANDIDATE AUDIO SIGNAL

The method 1100 begins with step 1102 with the processor 110 configured to acquire the candidate audio signal 310. In some embodiments, one or more algorithms may be performed for modifying the candidate audio signal. For example, the processor 110 may be configured to normalize, equalize, modify format, modify sample ratio, and/or modify a compression ratio of the candidate audio signal 310.

More than one candidate audio signal may be acquired by the processor 110 for performing the method 1100 on the one or more candidate audio signals, without departing from the scope of the present technology.

### STEP 1104: GENERATING A SET OF PATCHES USING THE PLURALITY OF AUDIO VALUES

The method 1100 continues to step 1104 with the processor 110 configured to generate the set of patches comprises the patches 511, 512, 513, 514, and 515. In some embodiments, the processor 110 may be configured to employ a pre-determined patch size value for generating the set of patches including a pre-determined number of audio values. It is contemplated that a plurality of sets of patches may be generated for a plurality of pre-determined patch size values.

### STEP 1106: GENERATING A COMBINED PATCH USING THE SET OF PATCHES

The method 1100 continues to step 1106 with the processor 110 configured to generate a combined patch 530 using the set of patches. In some embodiments, the processor 110 may be configured to generate a plurality of combined patches for a plurality of respective pre-determined patch sizes. The plurality of combined patch sizes may be used to generate a fingerprint for the candidate audio signal 310.

### STEP 1108: CLASSIFYING THE CANDIDATE AUDIO SIGNAL AS THE SYNTHETIC AUDIO SIGNAL USING THE COMBINED PATCH

The method 1100 continues to step 1108 with the processor 110 configured to classify the candidate audio signal 310 as a synthetic audio signal using the combined patch 530. In some embodiments, the processor 110 may be configured to classify the candidate audio signal 310 using the fingerprint generated for the candidate audio signal 310. In other embodiments, the classification may be performed by the processor 110 configured to use a given NN.

It should be noted that the processor 110 may be configured to perform a two-tier classification routine on the candidate audio signal 310. In some embodiments, after completing a time-domain processing routine onto the candidate audio signal 310, the processor 110 may be configured to perform a logic step for determining whether a second-tier classification routine is desired for classifying the candidate audio signal 310. In one embodiment, if one or more candidate audio signals originating from a common audio content provider are classified as synthetic audio signals, the processor 110 may be configured to determine that a second-tier classification routine is desired for classifying the candidate audio signal(s) from the common audio provider. The second classification routine may be embodied as a frequency-based processor routine executed on the one or more candidate audio signals. It is contemplated that, although a computation requirement of the frequency-based processing routine is comparatively higher than of the time-domain processing routine, accuracy and/or precision of the classification task performed by the frequency-based processing routine is comparatively higher than of the time-domain processing routine.

### STEP 1110: GENERATING A SPECTROGRAM REPRESENTAION

The method 1100 continues to step 1004 with the processor 110 configured to generate the spectrogram 700 based on the candidate audio signal 310. In some embodiments, the processor 1110 may be configured to use the STFT function 710 for generating the spectrogram 700 based on the candidate audio signal 310. Other spectrogram generation techniques are contemplated. In some embodiments, the spectrogram 700 representation comprises values associated with respective frequency-time pairs.

### STEP 1112: GENERATING A FREQUENCY-BASED COMBINED PATCH USING THE SPECTROGRAM

The method 1100 continues to step 1106 with the processor 110 configured to generate the frequency-based combined patch 730 using the spectrogram 700. A given combined value in the frequency-based combined patch 730 is a combination of values from the spectrogram 700 sharing a same frequency coordinate and different time coordinates. In some embodiments, the processor 110 may be configured to generate a plurality of frequency-based combined patches for a given candidate audio signal.

### STEP 1114: CLASSIFYING THE CANDIDATE AUDIO SIGNAL AS THE SYNTHETIC AUDIO SIGNAL USING THE FREQUENCY-BASED COMBINED PATCH

The method 1100 continues to step 1108 with the processor 110 configured to classify the candidate audio signal 310 as the synthetic audio signal using the frequency-based combined patch 730. In some embodiments, the processor 110 may be configured to classify the candidate audio signal 310 using more than one frequency-based combined patch generated for the candidate audio signal 310. In other embodiments, the classification may be performed by the processor 110 configured to use a given NN.

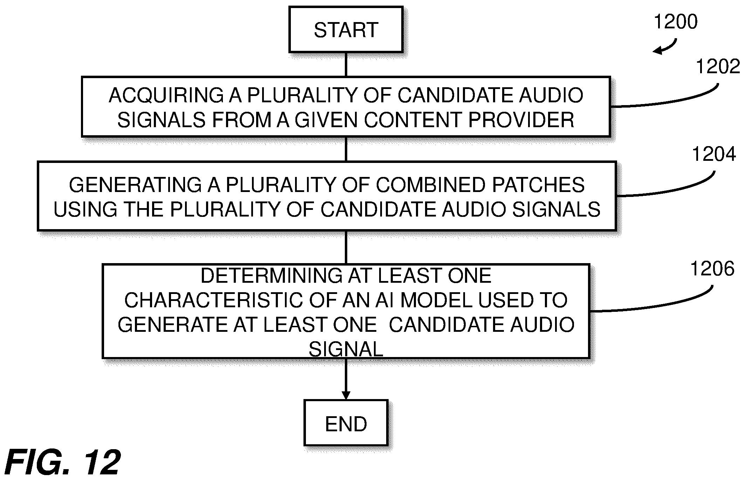

With reference to FIG. 12, there is depicted a scheme-block representation of a method 1200 executable by the processor 110. It should be noted that one or more additional steps may be executed by the processor 110 to those non-exhaustively illustrated in FIG. 12. At least some steps of the method 1200 as contemplated in the context of the present technology will now be described.

### STEP 1202: ACQUIRING A PLURALITY OF CANDIDATE AUDIO SIGNALS FROM A GIVEN CONTENT PROVIDER

The method 100 begins at step 1202 with the processor 110 configured to acquire the plurality of candidate audio signals 410 from a given content provider. For example, the processor 110 may be configured to acquire the plurality of candidate audio signals 410 from a given resource server associated with a given content provider.

### STEP 1204: GENERATING A PLURALITY OF COMBINED PATCHES USING THE PLURALITY OF CANDIDATE AUDIO SIGNALS

The method 1200 continues to step 1204 with the processor 110 configured to generate a plurality of combined patches using the plurality of candidate audio signals. In some embodiments, the plurality of combined patches may comprise time-domain combined patches generated using the time-domain processing pipeline illustrated in FIGS. 5A to 5C. In other embodiments, the plurality of combined patches may comprise frequency-domain combined patches generated using the frequency-domain processing pipeline illustrated in FIGS. 7A to 7C. In further embodiments, the processor 110 may be configured to generate a plurality of time-domain combined patches and a plurality of frequency-domain combined patches.

### STEP 1206: DETERMINING AT LEAST ONE CHARACTERISTIC OF AN AI MODEL USED TO GENERATE AT LAEST ONE CANDIDATE AUDIO SIGNAL

The method 1200 continues to step 1206 with the processor 110 configured to determining at least one characteristic of an AI model used to generate at least one candidate audio signal based on the plurality of combined patches. The at least one characteristic may be, but is not limited to: one or more stride parameters used in successive deconvolution layers of the AI-generation model, and type of AI architecture of the AI-generation model.

It should be apparent to those skilled in the art that at least some embodiments of the present technology aim to expand a range of technical solutions for addressing a particular technical problem encountered by the conventional digital content item recommendation systems, namely selecting and providing for display digital content items that are relevant to the users.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, sub-divided, or re-ordered without departing from the teachings of the present technology. Accordingly, the order and grouping of the steps is not a limitation of the present technology.

## Claims

1. A method for detecting a synthetic audio signal, the method executable by a processor, the method comprising:
acquiring a candidate audio signal;
generating a spectrogram representation of the candidate audio signal, the spectrogram representation comprising values for respective frequency-time pairs;
generating a frequency-based combined patch using the spectrogram,
a given combined value in the frequency-based combined patch being a combination of values from the spectrogram sharing a same frequency coordinate and different time coordinates;
classifying the candidate audio signal as the synthetic audio signal using the frequency-based combined patch.

2. The method of claim 1, wherein the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

3. The method of any one of claims 1 to 2, wherein the method further comprises normalizing the frequency-based combined patch.

4. The method of any one of claims 1 to 3, wherein the classifying comprises:
providing the combined patch to a regression model for generating a regression output, the regression output being indicative of a likelihood that the candidate audio signal is the synthetic audio signal; and
comparing the regression output against a pre-determined threshold for determining that the candidate audio signal as the synthetic audio signal.

5. The method of claim 4, wherein the regressing model is a Neural Network (NN).

6. The method of any one of claims 1 to 5, wherein the method further comprises:
generating a fingerprint for the candidate audio signal using at least the frequency-based combined patch, and
wherein the classifying comprises classifying the candidate audio signal as the synthetic audio signal using the fingerprint.

7. The method of any one of claims 1 to 6, wherein the candidate audio signal is a first candidate audio signal provider by a given audio signal provider, and the frequency-based combined patch is a first frequency-based combined patch, the method further comprises:
acquiring a second candidate audio signal;
generating a second spectrogram representation of the second candidate audio signal, the second spectrogram representation comprising values for respective frequency-time pairs;
generating a second frequency-based combined patch using the second spectrogram,
a given second combined value in the second frequency-based combined patch being a combination of values from the second spectrogram sharing a same frequency coordinate and different time coordinates;
classifying the second candidate audio signal as the synthetic audio signal using the second frequency-based combined patch.

8. The method of claim 7, wherein the method further comprises identifying at least one characteristic of an AI model used by the audio signal provider for generating the synthetic audio signal and the second synthetic audio signal based on at least one of the first combined patch and the second combined patch.

9. The method of claim 8, wherein the identifying the at least one characteristic comprises using at least one of a Singular Value Decomposition (SVD) and Principal Component Analysis (PCA) on the frequency-based combined patch.

10. The method of any one of claims 1 to 8, wherein the generating the spectrogram comprises generating the spectrogram using a Short-Tern Fourier Transform (STFT) function.

11. A processor for detecting a synthetic audio signal, the processor configured to:
acquire a candidate audio signal;
generate a spectrogram representation of the candidate audio signal, the spectrogram representation comprising values for respective frequency-time pairs;
generate a frequency-based combined patch using the spectrogram,
a given combined value in the frequency-based combined patch being a combination of values from the spectrogram sharing a same frequency coordinate and different time coordinates;
classify the candidate audio signal as the synthetic audio signal using the frequency-based combined patch.

12. The processor of claim 11, wherein the given combined value is at least one of an average of values from the spectrogram sharing the same frequency coordinate and different time coordinates, mean of values from the spectrogram sharing the same frequency coordinate and different time coordinates, and median of values from the spectrogram sharing the same frequency coordinate and different time coordinates.

13. The processor of any one of claims 11 to 12, wherein the processor is further configured to normalize the frequency-based combined patch.

14. The processor of any one of claims 11 to 13, wherein the processor is configured to classify:
provide the combined patch to a regression model for generating an regression output, the regression output being indicative of a likelihood that the candidate audio signal is the synthetic audio signal; and
compare the regression output against a pre-determined threshold for determining that the candidate audio signal as the synthetic audio signal.

15. The processor of claim 14, wherein the regressing model is a Neural Network (NN).
